(19) Europäisches Patentamt
European Patent Office
Office européen des brevets

(11) **EP 1 251 328 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(51) Int Cl.:
*G01B 11/00* (2006.01)      *G01B 9/02* (2006.01)

(21) Anmeldenummer: **02008409.1**

(22) Anmeldetag: **12.04.2002**

(54) **System und Verfahren zum Bestimmen einer Position oder/und Orientierung zweier Objekte relativ zueinander sowie Strahlführungsanordnung, Interferometeranordnung und Vorrichtung zum Ändern einer optischen Weglänge zum Einsatz in einem solchen System und Verfahren**

System and method for determining the position or/and the orientation of two objects relative to each other, as well as beam guidance device, interferometer system and device for modifying the optical pathlength for use in such a system and method

Système et procédé pour déterminer la position ou/et l'orientation de deux objets l'un part rapport à l'autre ainsi que appareil de guidage d'un faisceau, interféromètre et appareil pour modifier la longueur du trajet optique utilisé dans un tel système et procédé

(84) Benannte Vertragsstaaten:
**DE FR GB IT**

(30) Priorität: **13.04.2001 DE 10118392**

(43) Veröffentlichungstag der Anmeldung:
**23.10.2002 Patentblatt 2002/43**

(60) Teilanmeldung:
**11005596.9**
**11005597.7**

(73) Patentinhaber:
• **Carl Zeiss**
**89518 Heidenheim (Brenz) (DE)**
Benannte Vertragsstaaten:
**DE FR IT**
• **Carl-Zeiss-Stiftung trading as Carl Zeiss**
**89518 Heidenheim (Brenz) (DE)**
Benannte Vertragsstaaten:
**GB**

(72) Erfinder:
• **Höller, Frank Dr.**
**73434 Aalen (DE)**
• **Werner, Jürgen**
**73433 Aalen (DE)**
• **Gumbrell, Edward, Dr.**
**73430 Aalen (DE)**
• **Spieweck, Michael, Dr.**
**73431 Aalen (DE)**

(74) Vertreter: **Schorr, Frank Jürgen et al**
**Diehl & Partner GbR**
**Augustenstrasse 46**
**80333 München (DE)**

(56) Entgegenhaltungen:
WO-A-88/07656      WO-A-93/22637
DE-A- 10 015 242      SU-A- 1 739 165
US-A- 3 597 091      US-A- 4 621 926
US-A- 5 214 279      US-A- 5 808 740

EP 1 251 328 B1

## Beschreibung

Die Erfindung betrifft ein System zum interferometrischen Bestimmen einer Position zweier Objekte relativ zueinander. Insbesondere betrifft die Erfindung ein System zum interferometrischen Bestimmen von sowohl Position als auch Orientierung der beiden Objekte relativ zueinander. Weiterhin betrifft die Erfindung allgemein ein Verfahren zum Bestimmen von Position und Orientierung zweier Objekte relativ zueinander auf der Grundlage von wenigstens neun zwischen den beiden Objekten ermittelten Abständen. Dieses Verfahren ist insbesondere in dem System zum Bestimmen von Position und Orientierung der beiden Objekte relativ zueinander einsetzbar.

Weiterhin betrifft die Erfindung allgemein eine Strahlführungsanordnung zum Zuführen einer von einer Lichtquelle emittierten Strahlung zu einem Meßkopf, wobei Lichtquelle und Meßkopf relativ zueinander bewegbar sind oder/und die Strahlführungsanordnung sich ändernden Umwelteinflüssen ausgesetzt ist. Die Strahlführungsanordnung ist insbesondere in einem Sensorsystem oder in dem System zum Bestimmen von Position oder/und Orientierung der beiden Objekte relativ zueinander einsetzbar. Ferner betrifft die Erfindung eine Interferometeranordnung mit einer solchen Strahlführungsanordnung.

Weiterhin betrifft die Erfindung allgemein eine Vorrichtung zum Bereitstellen einer änderbaren optischen Weglänge bzw. eine Vorrichtung zum Bereitstellen einer änderbaren optischen Verzögerung, welche insbesondere in dem System zum Bestimmen von Position oder/und Orientierung der beiden Objekte relativ zueinander einsetzbar ist.

Ferner betrifft die Erfindung ein Koordinatenmeßgerät und eine Werkzeugmaschine, bei der das System zum Bestimmen der Position oder/und Orientierung der beiden Objekte relativ zueinander eingesetzt ist.

Es ist bekannt, Abstandsänderungen zwischen zwei Objekten interferometrisch zu erfassen, indem an einem der Objekte ein Retroreflektor angebracht wird, und an dem anderen der beiden Objekte ein Emitter für kohärente Strahlung vorgesehen ist, die auf den Retroreflektor gerichtet ist. Die von dem Retroreflektor zu dem anderen Objekt hin zurückgeworfene Strahlung wird über einen entsprechenden Empfänger empfangen, mit der Strahlung der Quelle zur interferenten Überlagerung gebracht und mit einem Strahlungsintensitätsmesser erfaßt. Bei einer Änderung des Abstands zwischen den beiden Objekten ändert sich der optische Weg des zwischen den beiden Objekten hin und her reflektierten Strahls, so daß aufgrund der Interferenz Intensitätsmaxima und -minima erzeugt werden. Wird die Zahl der Intensitätsänderungen erfaßt, so kann auf die Größe der Abstandsänderung geschlossen werden. Eine Messung des absoluten Abstands zwischen den beiden Objekten ist dann möglich, wenn durch eine Referenzfahrt die beiden Objekte zu Beginn auf einen vorbestimmten bekannten Abstand voneinander gebracht werden und daraufhin die Änderungen von dem bekannten Abstand aus erfaßt werden.

Aus WO 88/07656 ist ein System bekannt, um relative Änderungen der Position und der Orientierung zweier Objekte relativ zueinander zu erfassen. Hierzu sind an dem ersten Objekt drei mit Abstand voneinander angeordnete Retroreflektoren angebracht, und an dem zweiten Objekt sind sechs separat und mit Abstand voneinander angebrachte Interferometer-Emitter vorgesehen, deren ausgesendete Strahlung jeweils auf einen der Retroreflektoren gerichtet ist. Hierbei richten der erste, zweite und dritte Emitter jeweils ihre Strahlung auf den ersten Retroreflektor, der vierte und der fünfte Emitter richten ihre Strahlung auf den zweiten Retroreflektor und der sechste Emitter richtet seine Strahlung auf den dritten Retroreflektor. Durch die Bereitstellung der sechs Interferometer kann damit eine Änderung von sechs verschiedenen Abständen zwischen Orten an dem ersten bzw. zweiten Objekt erfaßt werden. War der Abstand zwischen den verschiedenen Orten an den beiden Objekten in einer Referenzstellung zu Beginn der Messung bekannt, so können auch nach Bewegung der beiden Objekte relativ zueinander die sechs Abstände absolut bestimmt werden. Aus den absoluten Werten der sechs Abstände kann dann die Position und die Orientierung der beiden Objekte relativ zueinander ermittelt werden.

Tritt bei diesem System während einer Abstands- bzw. Orientierungsänderung eine Unterbrechung eines der sechs Strahlen beispielsweise durch Umwelteinflüsse auf, so kann während dieser Unterbrechung eine Zählung der Intensitätsmaxima bzw. -minima nicht mehr erfolgen, so daß eine Bestimmung des absoluten Abstands zwischen den beiden Objekten ab diesem Zeitpunkt nicht mehr möglich ist. Ferner muß ein jeder Emitter seine Strahlung auf den ihm einzig zugeordneten Retroreflektor richten, so daß der Emitter eine entsprechende Strahlrichtungssteuerung umfaßt, um seine Strahlung ständig auf dem entsprechenden Retroreflektor gerichtet zu halten. Bei einer Strahlunterbrechung kann die Richtungssteuerung den Kontakt zu dem entsprechenden Retroreflektor verlieren.

Wird die kohärente Strahlung dem Emitter durch einen herkömmlichen Ein-Moden-Lichtleiter zugeführt und durch diesen auch schließlich dem Detektor zugeführt, so tritt bei einer Änderung der relativen Position zwischen Quelle und Detektor einerseits und Emitter andererseits oder durch eine andere Einwirkung von Umwelteinflüssen auch eine Änderung der Übertragungseigenschaften der Lichtleitfaser auf. Dies kann zur Folge haben, dass das dem Detektor zugeführte Signal starken Schwankungen unterliegt, welche ebenfalls als durch Bewegung zwischen den beiden Objekten verursachte Intensitätsmaxima bzw. -minima interpretiert werden. Auch dies führt zu einer fehlerhaften Messung der Abstandsänderung.

Aus den sechs ermittelten Abständen ist die Bestimmung der Position und Orientierung der beiden Objekte relativ zueinander mittels eines iterativen Rechenverfahrens, wie etwa eines herkömmlichen Gauß-Seidel-Verfahrens, möglich. Ein solches Rechenverfahren ist rechenintensiv und limitiert die Geschwindigkeit, mit der die ermittelte Position bzw. Orientierung pro Zeiteinheit aktualisiert werden kann.

Aus US 5,808,740 ist es ferner bekannt, einen Interferometer-Messstrahl mittels Strahlteiler in mehrere Messstrahlen aufzuteilen, um mit jedem einzelnen der mehreren Messstrahlen einen Abstand zu jeweils einem Retroreflektor zu messen.

Demgemäß ist es eine Aufgabe der vorliegenden Erfindung, ein System zum Bestimmen einer Position zweier Objekte relativ zueinander bereitzustellen, welches störungsunanfällig ist. Ferner ist eine Aufgabe ein solches System bereitzustellen, welches die Messung eines absoluten Abstands ermöglicht. Eine weitere Aufgabe ist es, ein solches System bereitzustellen, welches auch die Orientierung der beiden Objekte relativ zueinander bestimmen kann.

Diese Aufgaben werden gelöst durch ein System zum Bestimmen einer Position zweier Objekte relativ zueinander mit den Merkmalen des Anspruchs 1, zu welchem vorteilhafte Ausgestaltungen in den beiliegenden Ansprüchen 2 bis 29 definiert sind, sowie einem Koordinatenmessgerät mit den Merkmalen des beiliegenden Anspruchs 30 und einer Werkzeugmaschine mit den Merkmalen des beiliegenden Anspruchs 31.

Hierbei werden wenigstens drei Abstände zwischen wenigstens einem Ort an einem ersten der beiden Objekte und wenigstens drei Orten an dem zweiten der beiden Objekte interferometrisch bestimmt. Hierzu ist eine Quelle ausreichend kohärenter Strahlung vorgesehen, um ein von den Abständen der Orte abhängiges Interferenzsignal zu erzeugen. Hierzu wird von der Quelle abgeleitete Strahlung zur Überlagerung gebracht mit Strahlung, die einen Messzweig durchlaufen hat, der die Strecken zwischen den auf dem ersten Objekt einerseits und dem auf dem zweiten Objekt andererseits vorgesehenen Orten als optischen Weg umfaßt. Ein Rechner wertet das entstehende Interferenzsignal aus und bestimmt daraus die Abstände zwischen den entsprechenden Orten und hieraus wiederum die Position der beiden Objekte relativ zueinander. Die Orte an dem zweiten Objekt sind durch wenigstens drei daran angebrachte Retroreflektoren bestimmt, deren Abstände zueinander festgelegt und bekannt sind. Die an dem ersten Objekt festgelegten Orte sind zum einen ein Emitter für die von der Quelle bereitgestellte Strahlung, welcher diese Strahlung in einen solchen Raumwinkelbereich aussendet, daß die wenigstens drei Retroreflektoren in diesem Raumwinkelbereich enthalten sind. Der Raumwinkelbereich ist dabei weiter so groß ausgestaltet, daß die Retroreflektoren darin auch noch bei einer relativen Verschiebung der beiden Objekte in einem vorgesehenen Verschiebungsvolumen in dem Raumwinkelbereich enthalten sind. Als ein weiterer Ort ist an dem ersten Objekt ein Empfänger für Strahlung festgelegt, welcher die von dem Emitter ausgesendete und von den Retroreflektoren zurückgeworfene Strahlung empfängt und schließlich zur Überlagerung mit der weiteren von der Quelle abgeleiteten Strahlung dem Strahlungsintensitätsmesser zuführt.

Indem der wenigstens eine Emitter seine Strahlung in den Raumwinkelbereich aussendet, der wenigstens drei Retroreflektoren enthält, ist eine Strahllenkungseinrichtung, welche einen Meßstrahl herkömmlicherweise selektiv lediglich einem Retroreflektor zuführt und entsprechend angesteuert werden muß, um diesen Retroreflektor ständig zu verfolgen, nicht unbedingt notwendig.

Gleichwohl sind interferometrisch wenigstens drei Abstände zwischen Orten des ersten und zweiten Objekts bestimmbar, wobei, unter Zuhilfenahme weiterer Informationen, die Position der Objekte relativ zueinander auch eindeutig ableitbar ist.

Insbesondere ist vorgesehen, daß die Orte des Emitters und des Empfängers zusammenfallen, indem diese beiden Komponenten in einer gemeinsamen Baugruppe vereinigt sind. Andererseits kann es ebenfalls bevorzugt sein, diese Komponenten als separate Baugruppen auszubilden, welche mit festem und bekanntem Abstand relativ zueinander fest an dem ersten Objekt angebracht sind.

Soll neben der Position der beiden Objekte relativ zueinander auch noch deren Orientierung relativ zueinander bestimmt werden, so sind an dem ersten Objekt wenigstens drei Orte mit fester und bekannter Abstandsbeziehung relativ zueinander vorgesehen, so daß mindestens sechs und vorzugsweise mindestens neun Abstände zwischen den beiden Objekten bestimmbar sind.

Hierzu ist insbesondere vorgesehen, daß wenigstens drei mit Abstand voneinander angeordnete Emitter oder wenigstens drei Empfänger an dem ersten Objekt angebracht sind. Es kann auch hierbei wiederum jeweils ein Emitter und ein Empfänger zu einer Baugruppe vereinigt sein, oder es kann ein Emitter zusammen mit wenigstens drei Empfängern, oder es kann ein Empfänger mit wenigstens drei Emittern zusammen an dem ersten Objekt vorgesehen sein.

Die im Hinblick auf eine Eindeutigkeit der Positions- bzw. Orientierungsbestimmung eventuell notwendige weitere Information kann durch eine Positibn bzw. Orientierung gegeben sein, die die beiden Objekte in einem vorangegangenen Meßschritt eingenommen haben.

Vorzugsweise sind allerdings Maßnahmen vorgesehen, um wenigstens einen Strahl im Meßzweig auswählbar zu unterbrechen, so daß das diesem Strahl entsprechende Interferenzsignal nicht mehr auftritt. Hierdurch ist dieses dann nicht mehr auftretende Interferenzsignal eindeutig einem Abstand zwischen zwei der an den beiden Objekten vorgesehenen Orten zuordenbar.

Vorzugsweise erfolgt dies durch einen Umschalter, der, wenn mehrere Emitter an dem ersten Objekt vorgesehen sind, die Strahlung einer auswählbaren Teilmenge der Emitter zuführt. Sind mehrere Empfänger an dem ersten Objekt vorgesehen, so ist vorzugsweise ein Umschalter vorgesehen, der die von einer auswählbaren Teilmenge der Empfänger empfangene Strahlung der nachfolgenden interferierenden Überlagerung zuführt. Ebenfalls ist es bevorzugt, einen Strahlungsunterbrecher zwischen der Quelle und einer Teilmenge der Emitter vorzusehen, welcher wahlweise eine Unterbrechung der einem oder mehreren der Emitter zugeführten Strahlung bewirkt. Weiterhin ist es ebenfalls bevorzugt, den Strahlungsunterbrecher bei Bereitstellung mehrerer Empfänger zwischen dem entsprechenden Empfänger und dem Ort der interferierenden Überlagerung der Strahlung vorzusehen.

Alternativ ist es ebenfalls bevorzugt, wenigstens eine Teilmenge der Retroreflektoren derart auszugestalten, daß diese schaltbar sind zwischen einem ersten Zustand, in dem sie einfallende Strahlung zurückwerfen und einem zweiten Zustand, in dem sie einfallende Strahlung nicht zurückreflektieren.

Ferner ist es möglich, eine Unterbrechung wenigstens einer Teilmenge von zwischen den beiden Objekten hin und her verlaufenden Strahlen wahlweise zu unterbrechen, beispielsweise durch einen mechanischen Chopper.

Im Hinblick auf eine absolute Messung der Abstände zwischen den an den beiden Objekten vorgesehenen Orten ist es bevorzugt, die in dem Meßzweig in Abhängigkeit von den Abständen auftretenden optischen Wege mit einer optischen Referenzlänge zu vergleichen, die als eine Referenz separat durch das System bereitgestellt ist. Vorzugsweise ist diese optische Referenzweglänge einstellbar.

Das System arbeitet dann vorzugsweise nach dem Prinzip der optischen Kohärenztomographie bzw. der Weißlicht-Interferometrie.

Vorzugsweise umfaßt das System hierzu einen Strahlteiler zum Aufteilen der von der Quelle emittierten Strahlung in einen Referenzzweig, dem entsprechend ein Referenzstrahl zugeführt wird, sowie in den vorangehend bereits beschriebenen Meßzweig, dem der Meßstrahl zugeführt wird, der den optischen Weg zwischen den beiden Objekten hin und her durchläuft. In dem Referenzzweig ist dann die Vorrichtung zur Bereitstellung der änderbaren optischen Weglänge vorgesehen.

Alternativ ist es ebenfalls bevorzugt, die Vorrichtung zur Bereitstellung der änderbaren optischen Weglänge zwischen der Quelle und dem Emitter vorzusehen, wobei dem Emitter zwei Teilstrahlen der von der Quelle emittierten Strahlung zugeführt werden, nämlich ein erster Teilstrahl, der die Vorrichtung zur Bereitstellung der änderbaren optischen Weglänge durchlaufen hat, und ein zweiter Teilstrahl, der diese Vorrichtung nicht durchlaufen hat. Somit strahlt der Emitter Wellenzüge aus, bei denen zwischen mit räumlichem Abstand in Ausbreitungsrichtung der Strahlung angeordneten Teilbereichen eine feste Kohärenz- bzw. Phasenbeziehung besteht. Der Strahlungsintensitätsmesser registriert dann ein Intensitätsmaximum, wenn auch in dem Meßzweig eine der änderbaren optischen Weglänge entsprechende optische Weglängendifferenz bereitgestellt ist.

Mit dem System kann ein Verfahren zum Bestimmen der Position und der Orientierung der beiden Objekte relativ zueinander ausgeführt werden, welches nachfolgend beschrieben wird. Dieses Verfahren geht davon aus, daß wenigstens neun Abstände zwischen wenigstens drei verschiedenen Orten auf Seiten des ersten Objekts einerseits und wenigstens drei verschiedenen Orten auf Seiten des zweiten Objekts andererseits bestimmt sind.

Die Art der Bestimmung dieser wenigstens neun Abstände kann nach einem beliebigen Verfahren erfolgen, welches nicht auf eine interferometrische Bestimmung beschränkt ist. Dieses Verfahren zur Bestimmung der Abstände kann beispielsweise eine Laufzeitmessung oder ähnliches umfassen. Bevorzugterweise wird allerdings ein interferometrisches Verfahren eingesetzt, beispielsweise indem die Zahl auftretender Intensitätsmaxima und -minima bestimmt wird. Die Abstände können auch durch Vergleich mit einem Referenzabstand erfaßt werden, beispielsweise durch ein Weißlicht-Interferometrieverfahren.

Das Verfahren zeichnet sich dadurch aus, daß die Position und Orientierung der beiden Objekte relativ zueinander durch eine nicht-iterative Berechnung erfolgt. Diese nicht-iterative Berechnung hat den Vorteil, daß die zur Durchführung erforderliche Rechenzeit nicht von Konvergenzkriterien einer Iteration abhängt und somit im wesentlichen immer gleich ist und im allgemeinen schneller zum Ergebnis kommt als vergleichbare iterative Verfahren. Die herkömmlichen Verfahren berechnen auf der Grundlage von wenigstens sechs Abständen zwischen den beiden Objekten die Position und Orientierung iterativ. Im Unterschied hierzu sieht die Erfindung vor, daß die Berechnung auf wenigstens neun ermittelten Abständen beruht, dafür aber nicht-iterativ durchgeführt wird.

Vorzugsweise wird hierzu zunächst eine Datenstruktur errechnet, welche lediglich aus den an dem ersten Objekt festgelegten vorbestimmten Abständen der Orte einerseits und andererseits aus den an dem zweiten Objekt festgelegten vorbestimmten Abständen der Orte abgeleitet wird. Diese zunächst errechnete Datenstruktur ist somit von der Position bzw. Orientierung der beiden Objekte relativ zueinander unabhängig. Die Errechnung dieser Datenstruktur kann relativ aufwendig sein und relativ viel Rechenzeit beanspruchen, da sie lediglich einmal zu Beginn einer Serie mehrmaliger Messung und Berechnung sich ändernder Positionen und Orientierungen durchzuführen ist. Sind dann schnell nacheinander mehrmals geänderte Positionen und Orientierungen zu bestimmen, so sind jedesmal vergleichsweise wenige Rechenoperationen notwendig, indem zunächst aus den ermittelten Abständen eine weitere Datenstruktur bestimmt wird, welche von der Position und Orientierung der beiden Objekte relativ zueinander abhängt. Sodann werden die positions-/orientierungsunabhängige Datenstruktur und die positions-/orientierungsabhängige Datenstruktur miteinander verrechnet, um die Position und die Orientierung der beiden Objekte relativ zueinander zu bestimmen. Sämtliche Rechenschritte des Verfahrens laufen nicht-iterativ ab.

Das System kann eine Strahlführungsanordnung umfasssen, welche eine Lichtleiteranordnung umfaßt, um Licht von einer Quelle zu einem objektseitigen ersten Ende der Lichtleiteranordnung zu führen, wo es mit einem Objekt in einer zunächst beliebigen Weise wechselwirkt, von dem ersten Ende der Lichtleiteranordnung wieder aufgenommen und durch diese Lichtleiteranordnung einem Detektor zugeführt wird, um mit diesem Detektor Änderungen in den Eigenschaften des von dem Objekt zurückkommenden Lichts zu erfassen. Die Strahlführungsanordnung ist somit insbesondere in einem Sensor einsetzbar, bei dem das Licht einer Quelle einem Probenvolumen oder Probenmedium als Objekt zugeführt wird und sodann das von dem Probenvolumen oder Probenmedium beeinflußte Licht dem Detektor zugeführt wird. Das Probenvolumen oder Probenmedium kann zur Erfassung beliebiger physikalischer Effekte vorgesehen sein, wie beispielsweise Druck, Temperatur oder chemischen Zusammensetzungen, usw. Der Sensor kann auch ein Abstandssensor sein, bei dem ein reflektierendes Objekt als Meßmedium mit Abstand zu dem objektseitigen Ende der Lichtleiteranordnung angeordnet ist und die optische Weglänge zwischen dem objektseitigen Ende und dem Objekt zu bestimmen ist.

Der Vorteil dieser Strahlführungsanordnung ist insbesondere dann gegeben, wenn die Lichtleiteranordnung nicht ortsfest gehalten ist, sondern Bewegungen, wie Knickungen, oder Druckeinwirkungen oder anderen Umwelteinflüssen ausgesetzt ist.

Bei herkömmlichen Strahlführungsanordnungen, bei denen dem objektseitigen Ende der Lichtleiteranordnung im wesentlichen unpolarisiertes Licht zugeführt wird, ist die Lichtleiteranordnung ein nichtpolarisationserhaltender Lichtleiter. Bei auftretenden Bewegungen oder Umwelteinflüssen ändern sich die doppelbrechenden Eigenschaften des Lichtleiters, so daß zwischen verschiedenen Polarisationszuständen auf Hin- und Rückweg des Lichts durch den Lichtleiter Phasenunterschiede auftreten, welche zu destruktiven Interferenzen und somit Signaleinbrüchen aufgrund der Bewegungen und Umwelteinflüsse führen. Die Erfinder haben erkannt, daß dieses Problem weitgehend behoben werden kann, indem das Licht durch einen polarisationserhaltenden Lichtleiter dem objektseitigen Ende zugeführt wird. Ein solcher polarisationserhaltender Lichtleiter ist hinsichtlich seiner doppelbrechenden Eigenschaften vorgespannt, so daß die doppelbrechenden Eigenschaften durch Bewegungen und andere Umwelteinflüsse im wesentlichen unverändert bleiben. Das in den polarisationserhaltenden Lichtleiter eintretende unpolarisierte Licht wird in diesem in seine zwei Polarisationszustände zerlegt und legt den Weg zum objektseitigen Ende in dem polarisationserhaltenden Lichtleiter zurück, wobei für die beiden Polarisationszustände in dem Lichtleiter durchaus verschiedene optische Weglängen bereitgestellt sein können.

Zwischen dem Austritt am objektseitigen Ende des Lichts und dessen erneutem Eintritt in das objektseitige Ende wird das Licht durch Bereitstellung einer Phasenplattenanordnung, welche die Wirkung einer Halbwellenplatte aufweist, derart gedreht, daß das Licht, welches den einen Polarisationskanal des Lichtleiters auf dem Hinweg durchlaufen hat, den anderen Polarisationskanal auf dem Rückweg durchläuft und umgekehrt. Somit durchlaufen beide Polarisationszustände des Lichts auf dem Hin- und Rückweg beide Polarisationskanäle genau einmal und damit insgesamt jeweils im wesentlichen identische optische Weglängen. Durch Änderungen der Lage des polarisationserhaltenden Lichtleiters und Umwelteinflüsse auf denselben werden somit die vorangehend beschriebenen bei dem herkömmlichen Lichtleiter auftretenden destruktiven Interferenzen weitgehend vermieden.

Vorzugsweise ist vor dem objektseitigen Ende des polarisationserhaltenden Lichtleiters eine Viertelwellenplatte vorgesehen, welche einmal zwischen Austritt des Lichts am objektseitigen Ende und dem Objekt durchlaufen wird und welche nochmals von dem Licht auf dem Weg von dem Objekt zurück bis zum Eintritt in das objektseitige Ende durchlaufen wird, so daß sich insgesamt die Wirkung einer Halbwellenplatte ergibt.

Diese Strahlführungsanordnung wird in dem System zum Bestimmen der Position oder/und Orientierung der beiden Objekte relativ zueinander vorzugsweise dann eingesetzt, wenn der Emitter und der Empfänger in einer Baugruppe vereinigt sind und diese relativ zu der Quelle bewegbar ist. Die Emitter-Empfänger-Baugruppe wirkt hierbei zusammen mit einem der Retroreflektoren als Abstandssensor,

Die Strahlführungsanordnung wird jedoch vorzugsweise auch in einer Interferometeranordnung allgemeiner Art eingesetzt, bei der einer der Interferometerzweige relativ zueinander bewegbare Komponenten umfaßt, wobei die Interferometeranordnung weiter bevorzugt eine Weißlicht-Interferometeranordnung bzw. optische Tomographieanordnung ist.

Das System kan eine Vorrichtung umfassen, mit der eine optische Weglänge vergleichsweise schnell oder/und in einem vergleichsweise großen Bereich änderbar ist. Diese Vorrichtung stellt somit, anders betrachtet, eine änderbare optische Verzögerung ("optical delay") bereit.

Die Vorrichtung kann einem Riemenscanner umfassen, welcher einen Endlosriemen umfaßt, der zwischen zwei mit Abstand voneinander angeordneten Rollen derart gespannt ist, daß er sich entlang einer gemeinsamen Tangente an die beiden Rollen der Riemen im wesentlichen geradlinig erstreckt und dort einen Arbeitsbereich bildet. An dem Riemen ist wenigstens eine Spiegelanordnung fest angebracht und läuft an dem Riemen um die mittels eines Antriebs antreibbaren Rollen um, so daß er sich in dem Arbeitsbereich geradlinig bewegt. Es ist ferner eine Strahlführungseinrichtung vorgesehen, um einen Lichtstrahl parallel zu einer Erstreckungsrichtung des Riemens in dem Arbeitsbereich derart zu richten, daß der Lichtstrahl auf die Spiegelanordnung fällt, wenn diese in dem Arbeitsbereich angeordnet ist.

Die Spiegelanordnung und die Strahlführungseinrichtung sind dabei derart relativ zueinander angeordnet, daß der von der Spiegelanordnung zurückgeworfene Lichtstrahl wieder in die Strahlführungsanordnung eintritt.

Die Vorrichtung zeichnet sich hierbei dadurch aus, daß eine bezüglich der Strahlführungseinrichtung fest angeordnete zweite Spiegelanordnung vorgesehen ist und die erste und die zweite Spiegelanordnung jeweils derart ausgebildet sind, daß der Lichtstrahl zwischen seinem Austritt aus der Strahlführungseinrichtung und seinem Eintritt in diese wenigstens einmal zwischen der ersten und der zweiten Spiegelanordnung hin und her reflektiert wird.

Hierdurch ist bei einer gegebenen Länge des Arbeitsbereichs die durch die Vorrichtung bereitgestellte änderbare optische Weglänge in einem relativ großen Bereich änderbar, der insbesondere in etwa wenigstens der doppelten Länge des Arbeitsbereichs entspricht.

Die an dem Riemen angebrachte Spiegelanordnung umfaßt dabei vorzugsweise wenigstens zwei orthogonal zu dem Riemen im Arbeitsbereich versetzt angeordnete Reflektoren, und die an der Strahlführungseinrichtung angeordnete Spiegelanordnung umfaßt wenigstens einen Reflektor, der bezüglich der Strahlführungseinrichtung ebenfalls orthogonal zur Erstreckungsrichtung des Riemens im Arbeitsbereich versetzt ist.

Um zu erreichen, daß eine möglichst hohe Strahlintensität wieder in die Strahlführungseinrichtung eingekoppelt wird, ist der Reflektor, der in etwa auf der halben optischen Weglänge des Lichtstrahls zwischen dessen Austritt aus der Strahlführungseinrichtung und dessen Eintritt in dieselbe angeordnet ist, als ein Retroreflektor ausgebildet. Dieser Retroreflektor wird vorzugsweise durch drei paarweise orthogonal zueinander angeordnete Planspiegel gebildet.

Die nicht als Retroreflektor ausgebildeten Reflektoren der ersten und zweiten Spiegelanordnung sind vorzugsweise als zwei orthogonal zueinander angeordnete Planspiegel ausgebildet.

Die Vorrichtung ist vorzugsweise dahingehend ausgebildet, daß die Zeit, in der in dem Arbeitsbereich eine Spiegelanordnung zur Reflexion des Lichtstrahls zurück in die Strahlführungseinrichtung bereitsteht, welche Zeit auch als Tastgrad der Vorrichtung bezeichnet werden kann, möglichst groß ist. Dies bedeutet, daß Zeiten, in denen gerade keine Spiegelanordnung in dem Arbeitsbereich angeordnet ist, möglichst gering sind.

Andererseits sollten auch nicht zwei Spiegelanordnungen gleichzeitig in dem Arbeitsbereich angeordnet sein, da dann, bei einer gegebenen Länge des Arbeitsbereichs, nur ein Teilbereich desselben zur Bereitstellung der änderbaren optischen Weglänge verwendet werden kann. Im Hinblick darauf wäre es vorteilhaft, einen Abstand zwischen zwei auf dem Umfang des Riemens jeweils benachbart zueinander angeordneten Spiegelanordnungen derart einzustellen, daß dieser Abstand einem Abstand e der Achsen der beiden Rollen voneinander entspricht.

Allerdings bewegt sich die Spiegelanordnung vor deren Eintritt in den Arbeitsbereich auf einer Kreisbahn um eine der Rollen, was mit einer Änderung der auf die Spiegelanordnung wirkenden Beschleunigung bei deren Übergang in den Arbeitsbereich verbunden ist, was wiederum zu Schwingungen der Spiegelanordnung an dem Riemen führen kann. Im Hinblick darauf kann es vorteilhaft sein, den Abstand zwischen benachbarten Spiegelanordnungen geringer als den Achsabstand e der beiden Rollen zu wählen. Als vorteilhaft hat sich hier eine untere Grenze für die Wahl des Abstands von $0{,}9 \cdot e$ herausgestellt.

Andererseits kann es vorteilhaft sein, den Abstand zwischen aufeinanderfolgenden Spiegelanordnungen größer zu wählen als den Abstand e der beiden Rollen voneinander, so daß es eine Zeit gibt, in der nach einem Austritt einer vorauslaufenden Spiegelanordnung aus dem Arbeitsbereich eine dieser nachfolgende Spiegelanordnung noch nicht in den Arbeitsbereich eingetreten ist. Diese Zeit kann genutzt werden, um Umschaltungen der Elektronik oder der Strahlführung der aus der Vorrichtung austretenden Strahlung vorzunehmen, so daß nach Ablauf einer hierdurch entstehenden Umlaufzeit dann die nachfolgende Spiegelanordnung in den Arbeitsbereich eintritt und deren vollständiger Weg durch den Arbeitsbereich als Änderung der optischen Weglänge verwendet werden kann. Als eine Obergrenze für den Abstand der beiden Spiegelanordnungen voneinander hat sich hier ein Wert von $1{,}2 \cdot e$ und vorzugsweise $1{,}1 \cdot e$ herausgestellt.

Eine bevorzugte Abstimmung der Riemenlänge und des Rollendurchmessers bei vier an dem Riemen angeordneten Spiegelanordnungen ist dann gegeben, wenn der Abstand e der beiden Rollen voneinander einen Wert $e = a \cdot D$ aufweist, wobei D der Durchmesser der beiden Rollen ist und a eine Zahl aus dem Bereich von 1,3 bis 1,4 ist.

Um hohe Umlaufgeschwindigkeiten des Riemens und damit eine schnelle Änderung der optischen Weglänge bei einer präzisen Führung der Spiegelanordnungen im Hinblick auf eine hohe Meßgenauigkeit zu erreichen, ist der Riemen vorzugsweise als Metallband ausgebildet.

Ferner kann die Vorrichtung zum Bereitstellen einer änderbaren optischen Weglänge einen ersten Spiegel mit einer sich spiralförmig um eine Achse erstreckende Spiegelfläche umfassen. Radial innerhalb der Spiralspiegelfläche ist eine relativ zu dem Spiralspiegel drehbar angeordnete Strahlführungseinrichtung vorgesehen, welche einen Lichtstrahl unter einem einstellbaren Umfangswinkel auf den Spiralspiegel richtet. Der Spiralspiegel wirft die auf ihn gerichtete Strahlung zurück auf einen zweiten Spiegel, welcher zusammen mit der Strahlführungseinrichtung ebenfalls bezüglich dem Spiralspiegel drehbar angeordnet ist. Von diesem zweiten Spiegel wird der Lichtstrahl dann zurück auf den Spiralspiegel derart gerichtet, daß dieser den Lichtstrahl erneut reflektiert, und zwar zurück auf die Strahlführungseinrichtung, in welche der Strahl eintritt, um die Vorrichtung durch diese zu verlassen.

Durch Ändern der Drehstellung der Strahlführungseinrichtung und des mit dieser drehfest verbundenen zweiten Spiegels relativ zu dem Spiralspiegel ist damit die optische Weglänge änderbar, die der Strahl zwischen Austritt und erneutem Eintritt in die Strahlführungseinrichtung durchläuft.

Vorzugsweise ist der Spiralspiegel fest in einem Gehäuse zusammen mit einer Lichtquelle zur Speisung der Strahlführungseinrichtung angeordnet und die Strahlführungseinrichtung ist zusammen mit dem zweiten Spiegel drehbar bezüglich des Gehäuses gelagert. Hierdurch ist lediglich eine vergleichbar kleine Masse zur Rotation anzutreiben, um vergleichsweise große Änderungen der optischen Weglänge herbeizuführen. Die rotierende Masse kann bei entsprechender Auswuchtung vergleichsweise schnell angetrieben werden, um schnelle Änderungen der optischen Weglänge zu erzielen.

Vorzugsweise weist der Spiralspiegel die Gestalt einer logarithmischen Spirale auf, und der zweite Spiegel weist eine im wesentlichen plane Spiegelfläche auf, wodurch eine präzise Ausrichtung des von dem Spiralspiegel zurückgeworfenen Lichtstrahls auf die Strahlführungseinrichtung und damit eine effiziente Einkopplung des Strahls in dieselbe ermöglicht wird.

Ausführungsformen der Erfindung werden nachfolgend anhand von Zeichnungen näher erläutert. Hierbei zeigt:

Figur 1     eine Ausführungsform einer erfindungsgemässen Werkzeugmaschine, in welcher eine Ausführungsform des Systems zum Bestimmen Position zwei Objekte relativ zueinander integriert ist,

Figur 2     eine Detailansicht das in Fig. 1 gezeigten Systems zum Bestimmen der Position zwei Objekte relativ zueinander,

Figur 3     eine Detailansicht eines abgewandelten Systems zum Bestimmen der Position zweier Objekte relativ zueinander, welches zu dem auch die Orientierung der beiden Objekte relativ zueinander bestimmen kann,

Figur 4     eine schematische Gesamtansicht des in Fig. 3 gezeigten Systems zur Bestimmung von Position und Orientierung,

Figur 5     eine Darstellung eines Retroreflektors der Figuren 2 und 3 im Schnitt,

Figur 6     eine schematische Darstellung des Aufbaus einer Interferometeranordnung, wie sie in dem System gemäss Fig. 3 einsetzbar ist,

Figur 7     eine Variante der in Fig. 6 gezeigten Interferometeranordnung,

Figur 8     eine weitere Variante der in Fig. 6 gezeigten interferometer Anordnung,

Figur 9     ein Strahlungsintensitätsverlauf, wie er in einer Interferometeranordnung gemäß Figur 4, 6, 7 oder 8 auftritt,

Figur 10    eine Ausführungsform einer Lichtleiteranordnung, wie sie auch in den Interferometeranordnungen der Figuren 4, 6, 7 und 8 einsetzbar ist,

Figur 11    eine Ausführungsform einer Vorrichtung zum Bereitstellen einer änderbaren optischen Weglänge in Draufsicht,

Figur 12    eine Teildarstellung der in Fig. 11 gezeigten Vorrichtung von der Seite,

Figur 13    eine schematische perspektivische Darstellung einer weiteren Ausführungsform einer Vorrichtung zur Bereitstellung einer änderbaren optischen Weglänge,

Figur 14    eine ergänzende schematische Darstellung zu der in Fig. 13 gezeigten Vorrichtung,

Figur 15    eine Variante der in Fig. 1 gezeigten Anordnung, bei der mehrere Werkzeugmaschinen vorgesehen sind, und

Figur 16    ein Flußdiagramm zu Erläuterung einer Ausführungsform eines Verfahrens zum Bestimmen der Position oder Orientierung zweier Objekte relativ zueinander.

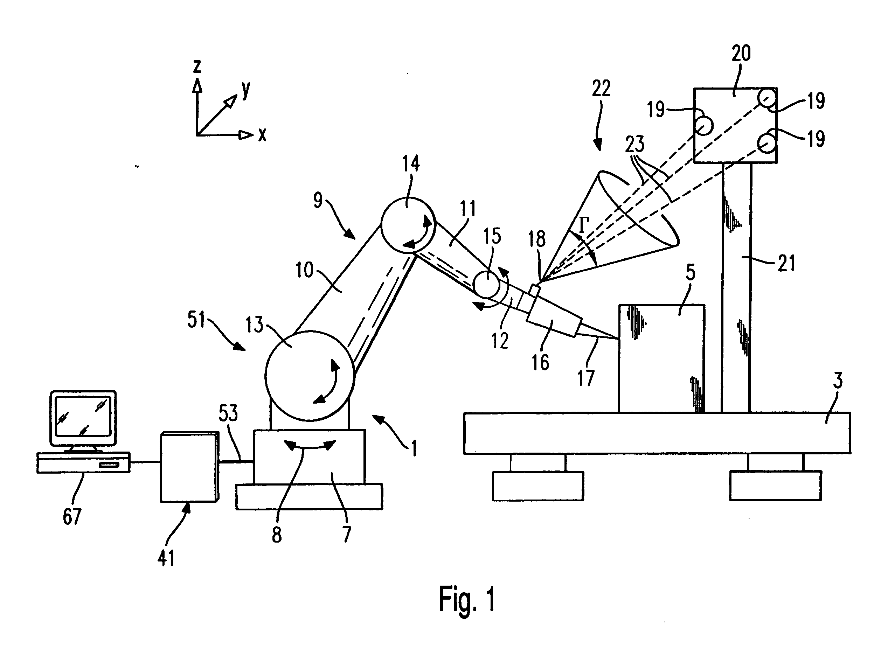

Fig. 1 zeigt eine Werkzeugmaschine 1 zur Bearbeitung eines auf einer Werkstückhalterung 3 angebrachten Werkstücks 5. Die Werkzeugmaschine 1 weist einen Sockel 7 auf, an dem um eine senkrechte Achse z in einer Richtung 8 drehbar ein Bearbeitungsarm 9 mit mehreren Teilarmen 10, 11, 12 und die Teilarme verknüpfenden Gelenken 13, 14, 15 vorgesehen ist. An einem bezüglich des Sockels 7 distalen Ende des Arms 9 ist ein Bearbeitungswerkzeug 16 angebracht, dessen schematisch dargestellte Werkzeugspitze 17 Bearbeitungen an dem Werkstück 5 vornimmt. Im Hinblick auf eine präzise Bearbeitung des Werkstücks 5 ist ein Meßsystem 22 zum Bestimmen der Position des Werkzeugs 16 relativ zu dem Werkstück 5 bzw. der Werkstückhalterung 3 vorgesehen. Das Positionsmeßsystem 17 umfasst einerseits einen Strahlungsemitter 18, der an dem Werkzeug 16 der Werkzeugmaschine 1 festgelegt ist, und andererseits drei Retroreflektoren 19, welche in fester räumlicher Beziehung zueinander derart auf eine Halteplatte 20 für die Retroreflektoren 19 angebracht sind, das diese nicht auf einer gemeinsamen Grade liegen, d.h. eine Ebene aufspannen. Die Halteplatte 20 für die Retroreflektoren 19 ist über einen Haltestab 21 fest mit der Werkstückhalterung 3 verbunden.

Der Strahlungsemitter 18 emittiert seine Strahlung in einen Raumwinkelbereich mit Öffnungswinkel Γ, der so groß gewählt ist, daß sämtliche Retroreflektoren 19 an der Platte 20 von Strahlung getroffen werden, und dies auch dann, wenn der Werkzeugarm 9 Bewegungen ausführt um das Werkzeug 16 in einem Bearbeitungsvolumen der Werkzeugmaschine zu verlagern, wobei der Emitter 18 relativ zu den Retroreflektoren 19 bewegt wird. Die von dem Emitter 18 ausgesandte und einen Retroreflektor 19 treffende Strahlung wird von diesem Retroreflektor 19 als zurück zu dem Emitter 18 gerichteter Lichtstrahl 23 zurückgeworfen. Der Emitter 18 ist mit einem Strahlungsempfänger zu einer Baugruppe vereinigt, wobei der Strahlungsempfänger dazu vorgesehen ist, die von den Retroreflektoren 19 zurückgeworfenen Lichtstrahlen 23 zu empfangen und in einem optischen System 41 weiterzuverarbeiten und mit einem Rechner 67 auszuwerten. Ziel der Auswertung ist es, die Abstände zwischen der Emitter-Empfänger-Baugruppe 18 einerseits und den drei Retroreflektoren 19 andererseits zu bestimmen. Diese Abstände entsprechen jeweils der Hälfte der optischen Weglängen, die die Strahlen 23 bei Durchlaufen der Strecken zwischen dem Emitter 18 und den Retroreflektoren 19 und wieder zurück zu der Emitter-Empfänger-Baugruppe 18 zurücklegen. Aus diesen drei Abständen kann die Position der Emitter-Empfänger-Baugruppe 18 und damit des Werkzeugs 16 und damit wiederum der Werkzeugspitze 17 relativ zu dem Werkstück 5 in Koordinaten x, y, z bestimmt werden, sofern die Position der drei Retroreflektoren 19 relativ zu dem Werkstück 5 bekannt ist.

Bei einer solchen Messung der Position des Werkzeugs 16 relativ zu dem Werkstück 5, welche mit hoher Genauigkeit bei einem entsprechenden Messverfahren möglich ist, ist es umgekehrt möglich, an die Präzision der Antriebe und Stellungssensoren in den Gelenken 13, 14, 15 des Werkzeugarms 9 entsprechend niedrigere Anforderungen zu stellen bzw. es ist möglich, das Werkstück 5 mit besonders hoher Präzision zu fertigen, da die exakte Position der Werkzeugspitze 17 bezüglich des Werkstücks 5 ständig mit einer dem Meßsystem 22 entsprechenden Genauigkeit bekannt ist.

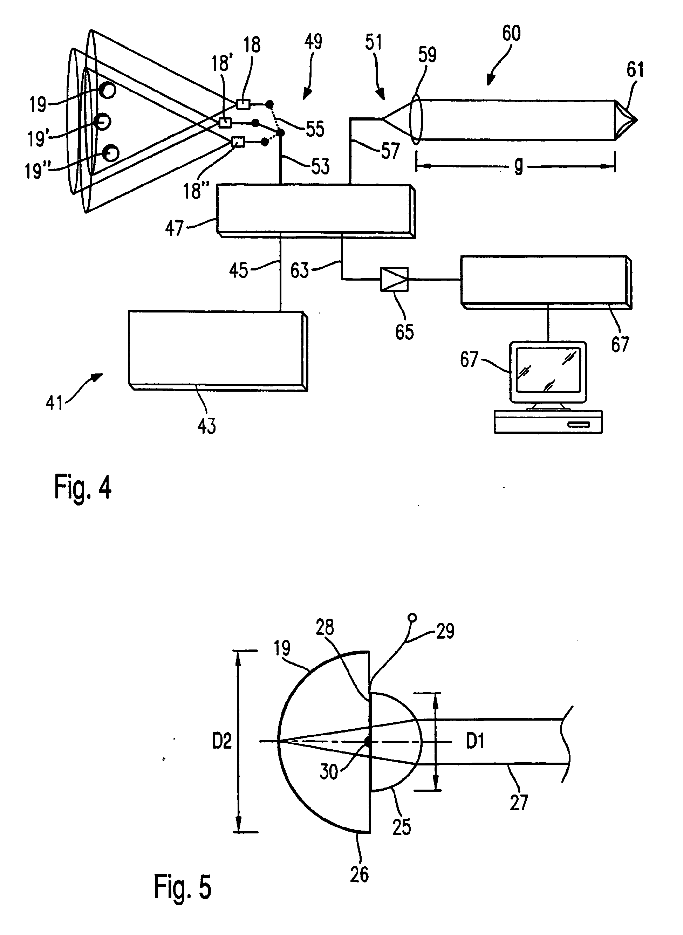

Fig. 5 zeigt den Aufbau eines der Retroreflektoren 19 im Detail. Der Retroreflektor 19 umfasst zwei Halbkugeln 25, 26 aus Glas, welche derart relativ zueinander angeordnet sind, daß ihre Kugelmittelpunkte in einem Punkt 30 zusammen fallen. Die beiden Halbkugeln 25, 26 weisen unterschiedliche Durchmesser auf, nämlich die Halbkugel 25 einen kleineren Durchmesser D1 und die Halbkugel 26 einen grösseren Durchmesser D2.

In Fig. 5 ist weiterhin ein Strahl 27 schematisch dargestellt, welcher als paralleler Strahl auf die kleinere Halbkugel 25 gerichtet ist. Die Durchmesser D1 und D2 sind dabei so aufeinander abgestimmt, daß die Krümmung der Halbkugel 25 den Strahl so fokussiert, daß ein Brennpunkt auf der Kugelfläche der Halbkugel 26 entsteht. An dieser Kugelfläche wird der Strahl in sich selbst zurückgeworfen und verlässt entsprechend den Retroreflektor 19 durch die vordere Halbkugel 25 derart, daß er im wesentlichen mit dem einfallenden Strahl 27 zusammenfällt.

Da die geometrische Anordnung der brechenden und spiegelnden Oberflächen der Halbkugeln 25, 26 sich auch bei einer Drehung um den Mittelpunkt 30 nicht ändert, wird ein einfallender Strahl 27 unabhängig von dessen Orientierung bezüglich des Retroreflektors 19 im wesentlichen in sich zurückgeworfen.

Zwischen den beiden Halbkugeln 25, 26 ist eine Flüssigkristallschicht 28 angeordnet, welche über einen Anschluss 29 durch den Rechner 67 umschaltbar ist zwischen einem ersten Zustand, in dem die Schicht 28 für die Strahlung 27 transparent ist, so daß der Retroreflektor 19 auch seine Funktion als solcher erfüllt. In einem zweiten Schaltzustand ist die Schicht 28 im wesentlichen nicht strahlungstransparent, so daß der Retroreflektor seine Funktion als solcher nicht bereitstellt. Über den Anschluss 29 ist der Retroreflektor 19 somit an- und ausschaltbar.

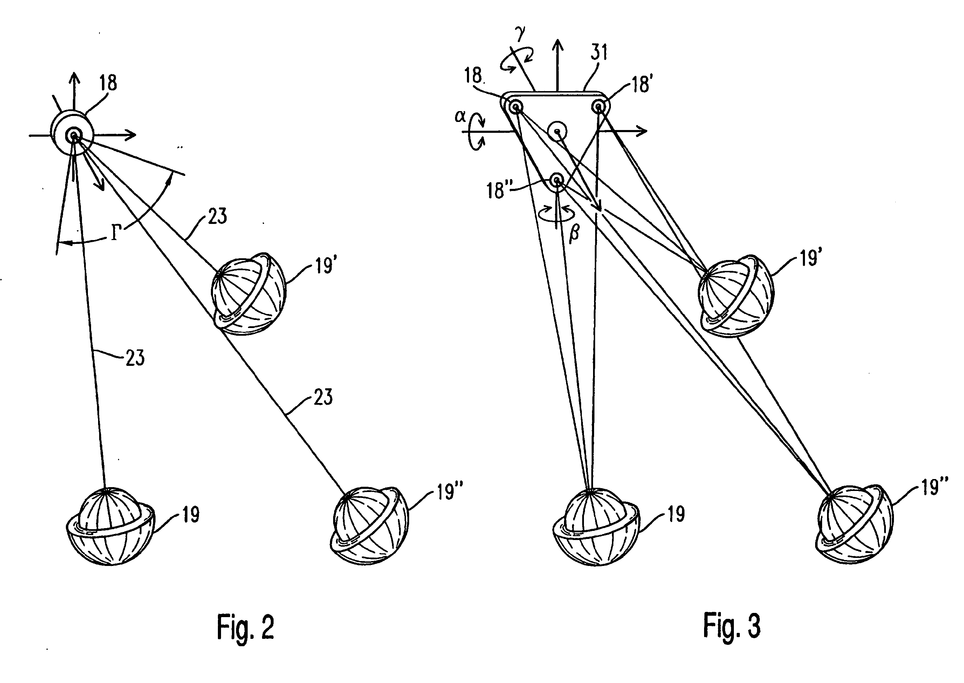

In Fig. 2 ist die Anordnung aus der Emitter-Empfänger-Baugruppe 18 und den drei dort mit 19, 19, 19 bezeichneten Retroreflektoren nochmals in räumlicher Darstellung in Detail gezeigt. Das Positionsbestimmungssystem 22 ermittelt die Abstände zwischen einer Emitteraustrittsfläche der Baugruppe 18 und den jeweiligen Mittelpunkten 30 der Retroreflektoren 19, 19 und 19 interferometrisch.

Aus den drei ermittelten Abständen ist somit die Position der Emitter-Empfänger-Baugruppe 18 bezüglich der drei Retroreflektoren in den Koordinaten x, y, und z ableitbar.

Fig. 3 zeigt ein der Fig. 2 ähnliches System zur Bestimmung der Position zweier Objekte relativ zu einander, wobei allerdings zusätzlich noch die Orientierung der beiden Objekte relativ zueinander erfaßt werden kann. Das in Fig. 3 gezeigte System entspricht dem in Fig. 2 gezeigten System mit dem Unterschied, daß auf Seiten des Werkzeugs 16 nicht lediglich eine Emitter-Empfänger-Baugruppe 18 vorgesehen ist, sondern daß drei derartige Baugruppen 18, 18', 18" an einer Montageplatte 31 vorgesehen sind, welche an dem Werkzeug 16 fest montiert ist. Die drei Emitter-Empfänger-Baugruppen 18, 18', 18" sind voneinander mit festen Abständen derart angeordnet, das sie ebenfalls nicht auf einer gemeinsamen Geraden liegen. Somit wird durch die drei Emitter-Empfänger-Baugruppen 18 auf Seiten des Werkzeugs 16 eine Ebene aufgespannt, deren Orientierung bezüglich der durch die drei auf Seiten der Werkstückhalterung 3 angeordneten Retroreflektoren 19 aufgespannten Ebene bestimmbar ist. Dies bedeutet, daß neben den Koordinaten x, y, z, welche die Position der Platte 31 bezüglich der Retroreflektoren 19 angeben, auch noch Winkel $\alpha$, $\beta$ und $\gamma$ bestimmt werden können, um welche die Platte 31 bezüglich der Ebene der Retroreflektoren 19 verkippt ist.

Auch bei dem System gemäß Fig. 3 senden die Emitter 18, 18', 18" ihre Strahlung jeweils in einen Raumwinkelbereich aus, der so zu groß ist, daß die drei Retroreflektoren 19 auch nach einer Verschiebung der Platte 31 bezüglich der Reflektoren 19 noch in diesem Raumwinkelbereich angeordnet sind.

Um die die Positionen und Orientierung der beiden Objekte relativ zueinander kennzeichnenden Parameter x, y, z, $\alpha$, $\beta$, $\gamma$ zu bestimmen, ist prinzipiell die Messung von mindestens sechs Abständen zwischen Orten notwendig, welche einerseits an dem Werkzeug 16 und andererseits an der Werkstückhalterung 3 festgelegt sind. Es können dies beispielsweise die drei Abstände sein, die der Emitter 18 von den drei Reflektoren 19, 19', 19" aufweist, sowie ferner die beiden Abstände, die der Emitter 18' von den beiden Reflektoren 19 und 19' aufweist, sowie weiter der Abstand, den der Emitter 18' von dem Reflektor 19 aufweist. Aus sechs gemessenen Abständen sind dann die oben genannten sechs Parameter x, y, z, $\alpha$, $\beta$, $\gamma$ zu bestimmen. Hierzu gibt es keine explizite und geschlossene eindeutige Lösung, so daß die Ermittlung der gewünschten Parameter herkömmlicherweise iterativ nach beispielsweise einem Gauß-Seidel-Verfahren erfolgt. Ein solches iteratives Auswerteverfahren ist relativ rechenaufwendig.

Es ist nun vorgesehen, die Parameter x, y, z, $\alpha$, $\beta$, $\gamma$ durch ein nicht iteratives Verfahren zu berechnen, wobei allerdings die Berechnung auf der Grundlage von neun Abständen erfolgt, welche zwischen wenigstens drei auf Seiten des Werkzeugs 16 und drei auf Seiten der Werkstückhalterung 3 festgelegten Orten vermessen werden. Dies bedeutet, daß ein jeder mögliche Abstand zwischen jedem Emitter 18, 18', 18" auf Seiten des Werkzeugs 16 und jedem Retroreflektor 19, 19', 19" auf Seiten der Werkstückhalterung 3 durch das System zunächst bestimmt wird.

Das Auswerteverfahren sei wie folgt erläutert. Hierzu werden folgende Abkürzungen eingeführt:

$$\vec{F}_1 = \left(F_{1x}, F_{1y}, F_{1z}\right)^{\mathrm{T}} \; ; \; \vec{F}_2 = \left(F_{2x}, F_{2y}, F_{2z}\right)^{\mathrm{T}} \; ; \; \vec{F}_3 = \left(F_{3x}, F_{3y}, F_{3z}\right)^{\mathrm{T}}$$

bezeichnet die Koordinaten der Emitter-Empfänger-Baugruppen 18, 18' bzw. 18" in einem an der Platte 31 festgelegten Koordinatensystem, d.h. in einem werkzeugseitigen Koordinatensystem.

Entsprechend beschreibt

$$\vec{R}_1 = \left(R_{1x}, R_{1y}, R_{1z}\right)^{\mathrm{T}} \; ; \; \vec{R}_2 = \left(R_{2x}, R_{2y}, R_{2z}\right)^{\mathrm{T}} \; ; \; \vec{R}_3 = \left(R_{3x}, R_{3y}, R_{3z}\right)^{\mathrm{T}}$$

die Koordinaten der Mittelpunkte der drei Retroreflektoren 19, 19' bzw. 19" in einem Koordinatensystem der Werkstückhalterung 3.

Die neun gemessenen Abstände zwischen den Baugruppen 18, 18', 18" einerseits und den drei Retroreflektoren 19, 19', 19" andererseits lassen sich so dann wie folgt darstellen:

$$d_1 = \overline{\vec{F}_1 \vec{R}_1} \quad ; \quad d_2 = \overline{\vec{F}_1 \vec{R}_2} \quad ; \quad d_3 = \overline{\vec{F}_1 \vec{R}_3}$$
$$d_4 = \overline{\vec{F}_2 \vec{R}_1} \quad ; \quad d_5 = \overline{\vec{F}_2 \vec{R}_2} \quad ; \quad d_6 = \overline{\vec{F}_2 \vec{R}_3}$$
$$d_7 = \overline{\vec{F}_3 \vec{R}_1} \quad ; \quad d_8 = \overline{\vec{F}_3 \vec{R}_2} \quad ; \quad d_9 = \overline{\vec{F}_3 \vec{R}_3} \quad ;$$

Da sowohl die Emitter 18, 18', 18" als auch die Reflektoren 19, 19', 19" jeweils in einer eigenen gemeinsamen Ebene angeordnet sind, lässt sich ferner

$$F_{1z} = F_{2z} = F_{3z} = 0 \quad \text{und} \quad R_{1z} = R_{2z} = R_{3z} = 0$$

wählen.

Der Ursprung des Koordinatensystems der Reflektoren 19 sei mit *BO* bezeichnet, der Ursprung der drei Emitter 18 sei mit *PO* bezeichnet. Die Position des Werkzeugs 16 bezüglich der Werkstückhalterung 3 lässt sich somit durch einen Translationsvektor

$$\vec{T} \equiv \overline{^BO\,^PO} \in \mathfrak{R}^3$$

beschreiben, wobei

$$^b\vec{T} = \left(^bT_1, {^bT_2}, {^bT_2}\right)^T \quad ; \quad {^p\vec{T}} = \left(^pT_1, {^pT_2}, {^pT_2}\right)^T$$

einen Vektor bezüglich des Koordinatensystems der Werkstückhalterung 3 bzw. bezüglich des Koordinatensystems des Werkzeugs 16 bezeichnet.

Ferner lässt sich die Orientierung der beiden Koordinatensysteme relativ zueinander durch eine Rotationsmatrix beschreiben, welche wie folgt darstellbar ist:

$$ROT \equiv [I]_P^B \in SO(3) = \begin{pmatrix} ^px\cdot{^bx} & ^py\cdot{^bx} & ^pz\cdot{^bx} \\ ^px\cdot{^by} & ^py\cdot{^by} & ^pz\cdot{^by} \\ ^px\cdot{^bz} & ^py\cdot{^bz} & ^pz\cdot{^bz} \end{pmatrix} = \begin{pmatrix} r_{11} & r_{21} & r_{31} \\ r_{12} & r_{22} & r_{32} \\ r_{13} & r_{23} & r_{33} \end{pmatrix}$$

Zur Bestimmung des Vektors $\vec{T}$ und der Matrix *ROT* aus den gemessenen Distanzen *d*1,...,*d*1 muss zunächst folgendes Gleichungssystems gelöst werden:

$$A\vec{q} = \vec{L} \qquad \text{bzw.} \qquad \vec{q} = A^\bullet \vec{L} \qquad \text{mit} \qquad A^\bullet = A^T\left(AA^T\right)^{-1}$$

Die Matrix *A*, welche im Laufe der Rechnung zu invertieren ist, wird hierbei derart aufgestellt, daß sie von den Abständen *d*1,...,*d*1 unabhängig ist und lediglich Komponenten enthält, die von den Koordinaten der Emitter 18 in deren eigenem Koordinatensystem und den Koordinaten der Reflektoren 19 in ebenfalls deren eigenem Koordinatensystem abhängen. Eine mögliche Wahl für die Matrix *A* ist wie folgt gegeben:

$$A = \begin{pmatrix} R_{1x} & R_{1y} & F_{1x} & F_{1y} & R_{1x} \cdot F_{1x} & R_{1x} \cdot F_{1y} & R_{1y} \cdot F_{1x} & R_{1y} \cdot F_{1y} & 1 \\ R_{2x} & R_{2y} & F_{1x} & F_{1y} & R_{2x} \cdot F_{1x} & R_{2x} \cdot F_{1y} & R_{2y} \cdot F_{1x} & R_{2y} \cdot F_{1y} & 1 \\ R_{3x} & R_{3y} & F_{1x} & F_{1y} & R_{3x} \cdot F_{1x} & R_{3x} \cdot F_{1y} & R_{3y} \cdot F_{1x} & R_{3y} \cdot F_{1y} & 1 \\ R_{1x} & R_{1y} & F_{2x} & F_{2y} & R_{1x} \cdot F_{2x} & R_{1x} \cdot F_{2y} & R_{1y} \cdot F_{2x} & R_{1y} \cdot F_{2y} & 1 \\ R_{2x} & R_{2y} & F_{2x} & F_{2y} & R_{2x} \cdot F_{2x} & R_{2x} \cdot F_{2y} & R_{2y} \cdot F_{2x} & R_{2y} \cdot F_{2y} & 1 \\ R_{3x} & R_{3y} & F_{2x} & F_{2y} & R_{3x} \cdot F_{2x} & R_{3x} \cdot F_{2y} & R_{3y} \cdot F_{2x} & R_{3y} \cdot F_{2y} & 1 \\ R_{1x} & R_{1y} & F_{3x} & F_{3y} & R_{1x} \cdot F_{3x} & R_{1x} \cdot F_{3y} & R_{1y} \cdot F_{3x} & R_{1y} \cdot F_{3y} & 1 \\ R_{2x} & R_{2y} & F_{3x} & F_{3y} & R_{2x} \cdot F_{3x} & R_{2x} \cdot F_{3y} & R_{2y} \cdot F_{3x} & R_{2y} \cdot F_{3y} & 1 \\ R_{3x} & R_{3y} & F_{3x} & F_{3y} & R_{3x} \cdot F_{3x} & R_{3x} \cdot F_{3y} & R_{3y} \cdot F_{3x} & R_{3y} \cdot F_{3y} & 1 \end{pmatrix}$$

Da im Rahmen der durchzuführenden Berechnung lediglich die Matrix *A* zu invertieren ist und diese nur Grössen enthält, die von den gemessenen Abständen unabhängig sind, kann diese Matrix vor der eigentlichen Abstandsmessung aufgestellt und invertiert werden.0

Die gemessenen Abstände gehen lediglich in den Vektor *L* ein, der bei der eigentlichen Abstandsmessung dann lediglich mit der bereits invertierten Matrix zu multiplizieren ist, wobei diese Multiplikation vergleichsweise schnell erfolgen kann. Bei der obigen Auslegung der Matrix *A* kann für den Vektor *L* folgender Ansatz gewählt werden:

$$\vec{L} = \frac{1}{2} \begin{pmatrix} F_{1x}^2 + F_{1y}^2 + R_{1x}^2 + R_{1y}^2 - d_1^2 \\ F_{1x}^2 + F_{1y}^2 + R_{2x}^2 + R_{2y}^2 - d_2^2 \\ F_{1x}^2 + F_{1y}^2 + R_{3x}^2 + R_{3y}^2 - d_3^2 \\ F_{2x}^2 + F_{2y}^2 + R_{1x}^2 + R_{1y}^2 - d_4^2 \\ F_{2x}^2 + F_{2y}^2 + R_{2x}^2 + R_{2y}^2 - d_5^2 \\ F_{2x}^2 + F_{2y}^2 + R_{3x}^2 + R_{3y}^2 - d_6^2 \\ F_{3x}^2 + F_{3y}^2 + R_{1x}^2 + R_{1y}^2 - d_7^2 \\ F_{3x}^2 + F_{3y}^2 + R_{2x}^2 + R_{2y}^2 - d_8^2 \\ F_{3x}^2 + F_{3y}^2 + R_{3x}^2 + R_{3y}^2 - d_9^2 \end{pmatrix}$$

Der Vektor *L* kann wiederum in einen Vektor *L1*, welcher ebenfalls von den gemessenen Abständen unabhängig ist und einen Vektor L2 zerlegt werden, der die Quadrate der gemessenen Abstände als Komponenten enthält. Der Vektor *L1* kann wiederum vor der eigentlichen Messung errechnet werden. Zur Auswertung einer Abstandsmessung ist dann lediglich, um den Vektor *L* zu erhalten, *L2* von *L1* zu subtrahieren.

Das Ergebnis *q* der Multiplikation des Vektors *L* von rechts an die Matrix *A* ergibt bei dem vorangehenden Ansatz

$$\vec{q} = \left( {}^b T_1, {}^b T_2, -{}^p T_1, -{}^p T_2, r_{11}, r_{12}, r_{21}, r_{22}, -\frac{1}{2} \left\| \vec{T} \right\|^2 \right)^T .$$

Damit ergibt sich die Translation des Werkzeugs 16 gegenüber der Werkstückhalterung 3 durch:

$$\vec{T} = \left(T_x, T_y, T_z\right)^T \qquad \text{mit} \qquad T_x = {}^bT_1 \; ; \; T_y = {}^bT_2 \; ; \; T_z = \sqrt{\left\|\vec{T}\right\|^2 - {}^bT_1^2 - {}^bT_2^2} \; .$$

Die noch fehlenden Elemente $r_{31}$ und $r_{32}$ der Rotationsmatrix werden wie folgt bestimmt:

$$r_{31} = \frac{{}^pT_1 - (r_{11} \cdot T_x) - (r_{21} \cdot T_y)}{T_z} \; ; \; r_{32} = \frac{{}^pT_2 - (r_{12} \cdot T_x) - (r_{22} \cdot T_y)}{T_z}$$

Die Rotation ist dann wie folgt darstellbar:

$$\begin{pmatrix} r_{13} \\ r_{23} \\ r_{33} \end{pmatrix} = \begin{pmatrix} 0 & -r_{31} & r_{21} \\ r_{31} & 0 & -r_{11} \\ -r_{21} & r_{11} & 0 \end{pmatrix} \begin{pmatrix} r_{12} \\ r_{22} \\ r_{32} \end{pmatrix}$$

Hieraus lassen sich die Verschwenkungswinkel $\alpha$, $\beta$ und $\gamma$ um die *x-* *y-* und *z*-Achse wie folgt bestimmen:

$$\beta = -\arcsin(r_{13}) \; ; \; \alpha = \arcsin\left(\frac{r_{23}}{\cos\beta}\right) \; ; \; \gamma = \arcsin\left(\frac{r_{12}}{\cos\beta}\right)$$

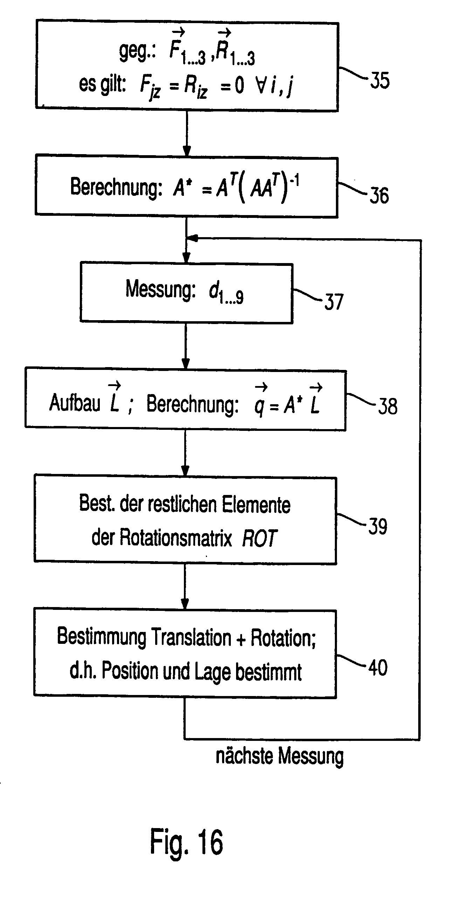

Das Auswerteverfahren wird nochmals unter Bezugnahme auf Fig. 16 erläutert:

Zunächst werden in einem Schritt 35 die Koordinaten $\vec{F}_{1...3}, \vec{R}_{1...3}$ der Emitter 18 bzw. Reflektoren 19 in deren eigenen Koordinatensystemen ermittelt. In einem Schritt 36 wird die oben beschriebene Matrix A erstellt und die konjugierte Matrix A* errechnet.

Die Schritte 35 und 36 erfolgen vor einer Serie aufeinanderfolgender Messungen, so daß die entsprechende aufwendige Rechenarbeit nicht während der Meßserie und der Auswertung einzelner Messungen erfolgen muss.

Eine Messung beginnt in einem Schritt 37 mit der Ermittlung der neun Abstände d1, ..., d9.

Es wird in einem Schritt 38 sodann der Vektor L errechnet und der Vektor $\vec{q} = A^* \vec{L}$ aus dem Produkt von A* und L ermittelt. Aus dem Vektor *q* werden in einem Schritt 39 die verbleibenden Elemente der Rotationsmatrix bestimmt, und in einem Schritt

40 werden sodann die Translationen x, y, z und die Rotationswinkel $\alpha$, $\beta$, $\gamma$ bestimmt. Dies bedeutet, daß dann sowohl die Position als auch die Orientierung des Werkzeugs 16 bezüglich der Werkstückhalterung 3 ermittelt ist.

Nach Abschluss des Schrittes 40 wird mit einer erneuten Abstandsmessung in Schritt 37 fortgefahren.

In Fig. 4 ist schematisch ein Interferometersystem 41 zur Bestimmung der Abstände d1,...,d9 dargestellt. Dieses umfasst eine Weißlichtquelle 43, welche beispielsweise durch eine Superlumineszenzdiode gebildet sein kann. Im Hinblick auf eine höhere Strahlungsintensität ist es jedoch bevorzugt, hierfür eine Faserlichtquelle einzusetzen, welche durch eine optisch gepumpte Lichtleitfaser bereitgestellt ist, die derart dotiert ist, daß darin verstärkte spontane Emission stattfindet. Eine solche Faserlichtquelle kann beispielsweise unter der Produktbezeichnung WLS-02 von der Firma AMS Technologies-Optotec Division, 82152 Martinsried/München bezogen werden. Es ist jedoch auch möglich, als Lichtquelle 43 einen Kurzpulslaser, wie etwa einen Femtosekunden-Laser, wie etwa einen Titan-Saphir-Laser einzusetzen. Das von der Quelle 43 emittierte Licht wird über eine Lichtleitfaser 45 einem Faserkoppler 47 zugeführt, welcher das Licht einerseits einem Messzweig 49 und andererseits einem Referenzzweig 51 zuführt. Dem Messzweig 49 wird das Licht über einen Faserleiter 53 von dem Faserkoppler 47 her zugeführt, wobei durch den Rechner 67 ein steuerbarer optischer Umschalter 55 vorgesehen ist, der das Licht wahlweise einer der Emitter-Empfänger-Baugruppen 18, 18', 18" zuführt. Die Emitter 18, 18', 18" senden ihr Licht jeweils in Raumwinkel derart aus, daß das ausgesendete Licht die drei Reflektoren 19, 19', 19" trifft und von diesen zurück zu den Emitter-Empfänger-Baugruppen reflektiert wird. Das von diesen wiederum empfangene Licht wird über den Lichtleiter 53 wieder dem Faserkoppler 47 zugeführt.

In dem Referenzzweig 51 wird das Licht von dem Faserkoppler 47 durch einen Lichtleiter 57 einer Vorrichtung 60 zur Bereitstellung eines änderbaren optischen Wegs g zugeführt. Die Vorrichtung umfasst eine vor dem Ende der Faser 47 angeordnete Kollimationsoptik 59, welche das zugeführte Licht auf einen Spiegel 61 richtet, der mit einem änderbaren Abstand g von der Kollimationsoptik 59 angeordnet ist. Das von dem Spiegel 61 zurückgeworfene Licht wird durch die Optik 59 wieder in die Lichtleitfaser 47 eingekoppelt und wiederum dem Faserkoppler 47 zugeführt.

Der Faserkoppler überlagert das durch die Fasern 53 und 57 aus dem Messzweig 49 bzw. Referenzzweig 59 zugeführte Licht und gibt dieses über eine Lichtleitfaser 63 an einen Strahlungssensor 65 aus.

Wenn eine optische Weglänge des Messzweigs 59 mit der optischen Weglänge des Referenzzweigs 51 übereinstimmt, registriert der Strahlungssensor 65 eine erhöhte Strahlungsintensität. Die optische Weglänge des Messzweigs 59 ist gegeben durch die optische Weglänge zwischen dem Faserkoppler 47 und einem der Reflektoren 19, 19', 19". Die optische Weglänge in dem Referenzzweig 51 ist gegeben durch die optische Weglänge zwischen dem Faserkoppler 57 und dem Spiegel 61.

In dem Messzweig 49 sind meist neun verschiedene optische Weglängen bereitgestellt, die den neun Abständen zwischen den Emitter-Empfänger-Baugruppen 18', 18', 18" und den drei Reflektoren 19, 19', 19" entsprechen. Durch kontinuierliches Ändern der Länge g über den zur Verfügung stehenden Bereich können dann neunmal durch den Sensor 65 Intensitätserhöhungen festgestellt werden. Der Rechner 67 kann aus der Länge g, bei der eine entsprechende Intensitätserhöhung stattfindet, dann den Abstand zwischen einem entsprechenden Paar aus Emitter-Empfänger-Baugruppe und Retroreflektor ermitteln. Hierbei ist es zunächst nicht unbedingt klar, zwischen welchem Paar aus Emitter-Empfänger-Baugruppe und Retroreflektor dieser Abstand realisiert ist. Es ist allerdings möglich, daß weitere Kenntnisse, wie beispielsweise eine vorangehend bereits bestimmte Position und Orientierung der Baugruppen 18 und Reflektoren 19 als zusätzliche Information bekannt sind. Es ist jedoch auch möglich, durch Betätigen des Umschalters 55 die Strahlung lediglich einer der Emitter-Empfänger-Baugruppen zuzuführen und/oder durch Betätigen der LCD-Verschlüsse 28 in den Retroreflektoren lediglich einen derselben zu aktivieren, so das eine von dem Sensor 65 registrierte Intensitätserhöhung genau einem Paar von Emitter-Empfänger-Baugruppen und Reflektoren zuzuordnen ist. Sowohl der Umschalter 55 als auch die LCD-Verschlüsse 28 sind von dem Rechner 67 gesteuert. Der Rechner 67 steuert auch einen Antrieb zur Änderung der Länge g in dem Referenzzweig 51, weshalb dem Rechner 67 sämtliche Informationen zugänglich sind, um die Abstände d1,...,d9 zu ermitteln. Aus diesen bestimmt der Rechner dann nach dem vorangehenden in Zusammenhang mit Fig. 16 erläuterten Verfahren die Position und Orientierung der Emitter-Empfänger-Baugruppen 18 und Reflektoren 19 relativ zueinander.

Nachfolgend werden Varianten des in Zusammenhang mit Fig. 4 erläuterten Interferometersystems dargestellt. Hierbei sind ihrer Funktion einander entsprechende Komponenten mit den Bezugszahlen der Figuren 1 bis 4 versehen, zu unterscheiden jedoch durch einen zusätzlichen Buchstaben ergänzt. Zur Erläuterung wird auf die gesamte vorangehende Beschreibung Bezug genommen.

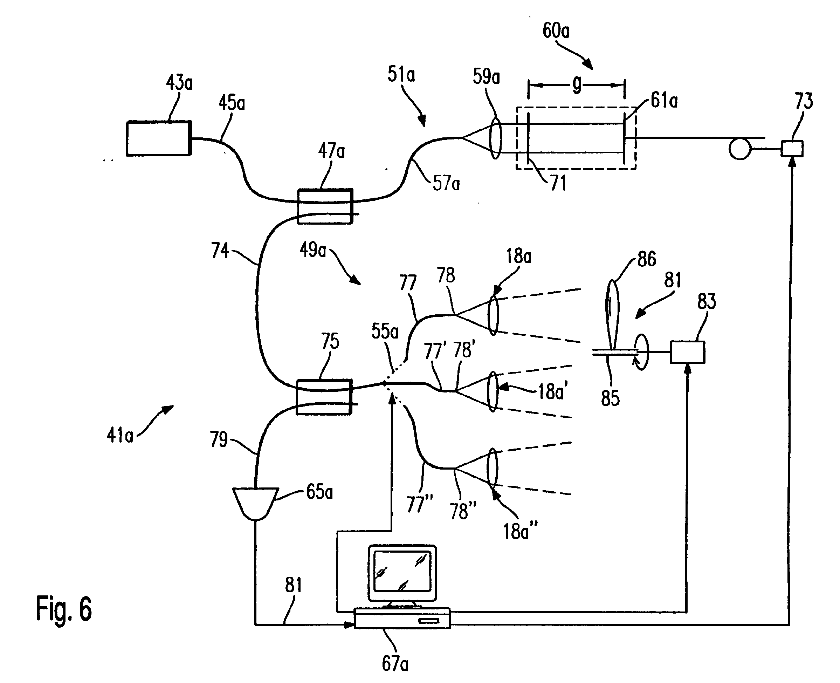

Ein in Fig. 6 gezeigtes Interferometersystem 41a umfasst eine Weißlichtquelle 43a, deren Strahlung durch einen Lichtleiter 45a einem Faserkoppler 47a zugeführt wird, der die Strahlung über einen Lichtleiter 57a einem Referenzzweig 51a zuführt. In dem Referenzzweig 51a ist eine Vorrichtung 60a zur Bereitstellung einer änderbaren optischen Weglänge angeordnet.

Die Vorrichtung 60a umfasst eine Kollimationsoptik 59a, die die an dem Ende der Faser 57a austretende Strahlung durch eine halbdurchlässige Platte 71 auf einen Spiegel 61a richtet, durch den die Strahlung zurück in die Faser 57a reflektiert wird. Ein Abstand g zwischen der halbdurchlässigen Platte 71 und dem Spiegel 61a ist durch einen Antrieb 73 änderbar, welcher von einem Rechner 67a angesteuert wird. Allerdings wird die von dem Ende der Faser 57a emittierte Strahlung durch den halbdurchlässigen Spiegel 71a in zwei Teilstrahlen aufgeteilt. Diese sind ein erster Teilstrahl, der von dem halbdurchlässigen Spiegel 71a unmittelbar zurück in die Faser 57a reflektiert wird. Der zweite Teilstrahl durchsetzt den halbdurchlässigen Spiegel 71a und durchläuft, im Unterschied zu dem ersten Teilstrahl, eine zusätzliche Weglänge von zweimal g, bevor der zweite Teilstrahl nach Reflexion an dem Spiegel 61a in die Faser 57a eingekoppelt wird. Somit weist die in der Faser 57a zu dem Faserkoppler 47a zurücklaufende Strahlung eine Kohärenzstruktur derart auf, daß mit dem Abstand 2*g voneinander angeordnete Wellenzüge zueinander kohärent sind.

Der Faserkoppler 47a führt die von dem Referenzzweig 51a zurückkommende Strahlung einem Messzweig 49a über einen Lichtleiter 74 und einen weiteren Faserkoppler 75 zu. Nach dem Faserkoppler 75 ist in dem Referenzzweig 49a ein Umschalter 55a vorgesehen, um die Strahlung durch Lichtleiter 77 Emitter-Empfänger-Baugruppen 18, 18', 18" zuzuführen, welche die Strahlung hin zu in Fig. 6 nicht dargestellten Retroreflektoren emittieren. Die von den Retroreflektoren zurückgeworfene Strahlung wird wiederum in die Emitter-Empfänger-Baugruppen 18a eingekoppelt und über den Faserkoppler 75 und eine Lichtleitfaser 79 einem Strahlungssensor 65a zugeführt, dessen Meßsignal über eine Leitung 81 dem Rechner 67a zur Verfügung gestellt wird.

In dem Messzweig 49a verläuft somit die von den Retroreflektoren zurückgeworfene Strahlung zurück zu dem Faserkoppler 75 und trifft auf den Detektor 65a. Zusätzlich zu der von den Retroreflektoren zurückgeworfenen Strahlung entsteht auch noch ein hin zu dem Detektor 65a verlaufender weiterer Strahlungsanteil, der durch eine Spiegelung an Enden 78, 78' 78" der Fasern 77, 77' bzw. 77" erzeugt wird. Somit entsteht zwischen einem Teilstrahl, der in dem Messzweig 49a durch die Reflexion an dem Faserende 78 erzeugt wird und einem weiteren Teilstrahl, der durch die Reflexion an dem Retroreflektor erzeugt wird, eine feste Kohärenzbeziehung, ähnlich wie dies für die beiden Teilstrahlen in Zusammenhang mit der Vorrichtung 60a bereits beschrieben wurde. Wenn nun die optische Weglänge zwischen dem Faserende 78 und dem Retroreflektor und zurück gleich der optischen Weglänge 2*g ist, wie sie durch die Vorrichtung 60a bereitgestellt ist, registriert der Strahlungssensor 65a ein Intensitätsmaximum. Hierüber ist der Abstand zwischen dem entsprechenden Faserende 78 bzw. der Emitter-Empfänger-Baugruppe 18a unmittelbar bestimmbar.

In Fig. 6 ist ebenfalls ein durch den Rechner 67a gesteuerter Umschalter 55a dargestellt, um die Strahlung selektiv einer der Emitter-Empfänger-Baugruppen 18a, 18a und 18a zuzuführen. Alternativ ist es jedoch ebenfalls möglich, in dem Strahlengang zwischen den Emitter-Empfänger-Baugruppen und den Retroreflektoren ein Chopperrad 81 vorzusehen, welches durch einen durch den Rechner 67a gesteuerten Motor 83 um eine Achse 85 drehbar derart angeordnet ist, daß ein Flügel 86 des Chopperrads 81 wahlweise die von der Emitter-Empfänger-Baugruppe 18a oder der Emitter-Empfänger-Baugruppe 18a' emittierte Strahlung unterbricht.

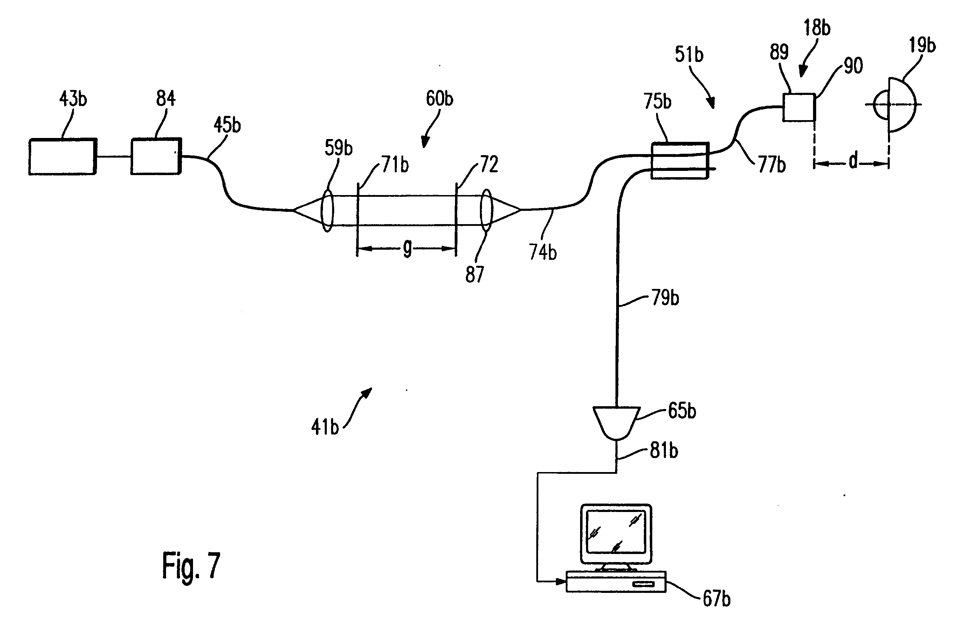

Ein in Fig. 7 dargestelltes Interferometersystem 41b ist, so wie es dargestellt ist, zusammen mit der in Fig. 2 dargestellten Anordnung aus einer Emitter-Empfänger-Baugruppe 18 und drei Retroreflektoren geeignet die Position zweier Objekte relativ zueinander zu bestimmen, wobei in Fig. 7 lediglich ein Retroreflektor 19 dargestellt ist. Es ist jedoch einfach möglich, das Interferometersystem 41b derart abzuwandeln, daß es drei Emitter-Empfänger-Baugruppen aufweist und zur Bestimmung ebenfalls der relativen Orientierung zweier Objekte geeignet ist, wie dies in Fig. 3 dargestellt ist.

Das Interferometersystem 41b umfasst wiederum eine Weißlichtquelle 43b, wobei diese ihre Strahlung dem restlichen System über einen optischen Isolator 84 zuführt, um die Quelle 43b vor durch das System zurück zu dieser zurückreflektierter Strahlung zu schützen.

Über eine Glasfaser 45b und eine Kollimationsoptik 59b wird die von der Quelle 43b emittierte Strahlung einer Vorrichtung 60b zur Bereitstellung einer änderbaren optischen Weglänge zugeführt, welche, im Unterschied zu der in Fig. 6 dargestellten Vorrichtung, nicht in Reflexion sondern in Transmission arbeitet. Hierzu umfasst die Vorrichtung 60b zwei halbdurchlässige Spiegel 71b und 72, deren Abstand g voneinander motorisch änderbar ist. Durch die beiden Spiegel 71a und 72 wird die Strahlung in zwei Teilstrahlen aufgeteilt, nämlich einen Teilstrahl, der die beiden Spiegel 71a und 72 unmittelbar durchsetzt und durch eine weitere Optik 87 in einen Lichtleiter 74b eingekoppelt wird, der die Strahlung weiter zu einem Messzweig 51b führt. Ein zweiter Teilstrahl durchsetzt zunächst den Spiegel 71b, wird an dem Spiegel 72 reflektiert, verläuft zurück zu dem Spiegel 71b, wird von diesem erneut reflektiert, durchläuft dann den Spiegel 72 und wird über die Optik 87 in die Faser 74b eingekoppelt. Im Unterschied zu dem ersten Teilstrahl weist der zweite Teilstrahl eine Verzögerung auf, welche der optischen Weglänge 2*g entspricht.

Der weitere Aufbau des in Fig. 7 gezeigten Interferometersystems 41b ist weitgehend ähnlich dem des in Fig. 6 gezeigten Interferometersystems, es werden nämlich die beiden Teilstrahlen über einen Faserkoppler 57b und eine Lichtleitfaser 77b einer Emitter-Empfänger-Baugruppe 18b zugeführt, von der sie zu den Reflektoren 19b hin emittiert wird. Von den Reflektoren 19b zurückgeworfene Strahlung wird wieder in die Faser 77b eingekoppelt und über einen Lichtleiter 79b einem Strahlungssensor 65b zugeführt.

Die Emitter-Empfänger-Baugruppe 18b umfasst ferner eine an das Ende der Faser 77b angekoppelte GRIN-Linse, um die Strahlung in den notwendigen Raumwinkel zu emittieren. Eine Austrittsfläche 90 der Linse 89 ist teilweise verspiegelt, um daran einen Rückreflex zu erzeugen, welcher unmittelbar zurück auf den Sensor 65b geleitet wird. Der Sensor 65b erfasst dann ein erhöhtes Intensitätssignal, wenn die Länge g zwischen den Spiegel 71b, 72 der Vorrichtung 60b mit dem Abstand d zwischen der Austrittsfläche 90 der Faser 77b und dem Mittelpunkt des Reflektors 19b im wesentlichen zusammenfällt.

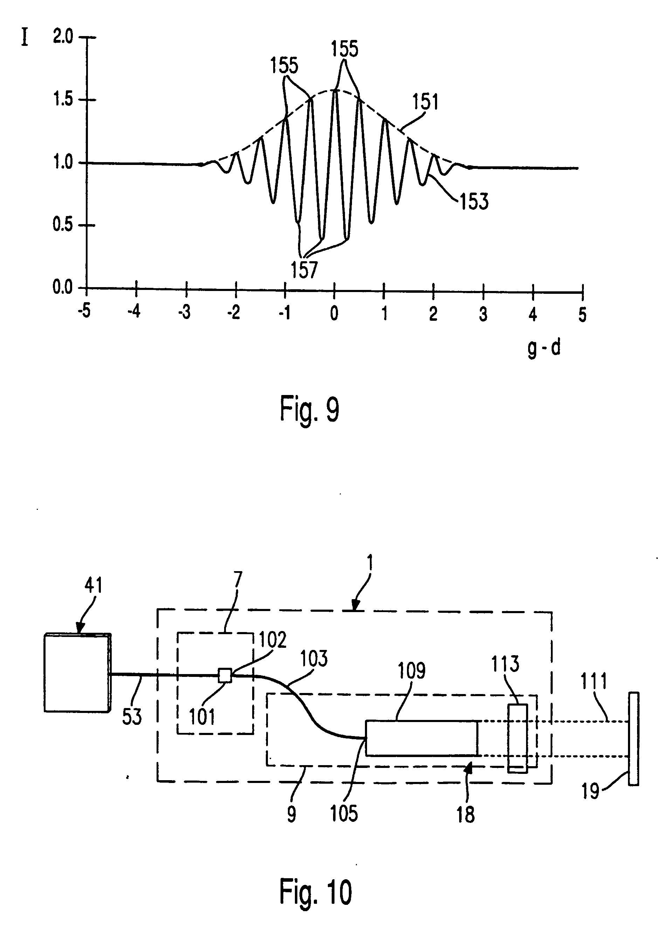

Fig. 9 zeigt einen Verlauf 153 eines Meßsignals I, wie es der Strahlungssensor 65b in Abhängigkeit von dem Abstand g der Spiegel 71b und 72 voneinander ausgibt, wobei angenommen ist, daß der Abstand d zwischen Reflektorkugel 19b und Emitter-Empfänger-Baugruppe 18b konstant ist. Sind die Abstände d und g identisch (g-d=0), so ergibt sich ein maximales Interferenzsignal I. Beidseits dieses Maximums bei g-d=0 fällt das Meßsignal oszillierend ab.

Um den Abstand d genau zu messen, ist nun der Abstand g zu suchen, an dem das Interferenzsignal maximal ist. Dies kann zum einen dadurch erfolgen, daß die mit gestrichelter Linie in Fig. 9 eingetragene Einhüllende 151 an das Meßsignal 153 ausgewertet wird und deren Maximum gesucht wird. Diese Vorgehensweise ist meistens ausreichend, um den Abstand d mit einer ausreichenden Genauigkeit messen zu können.

Ein genaueres, allerdings rechenintensiveres Verfahren sieht vor, mehrere Maxima 155 und Minima 157 der Meßkurve 153 zu lokalisieren, um daraus den Nullpunkt der Horizontalachse in Fig. 9, d.h. die exakte Lage des Intensitätsmaximums aufzufinden. Dies ist beispielsweise dann möglich, wenn der Nullpunkt als Mittelwert aus den beiden tiefsten Minima 157 und den drei höchsten Maxima 155 ermittelt wird. Auch andere Auswertungstechniken zur Auffindung des Nullpunktes aus dem Verlauf 153 sind denkbar.

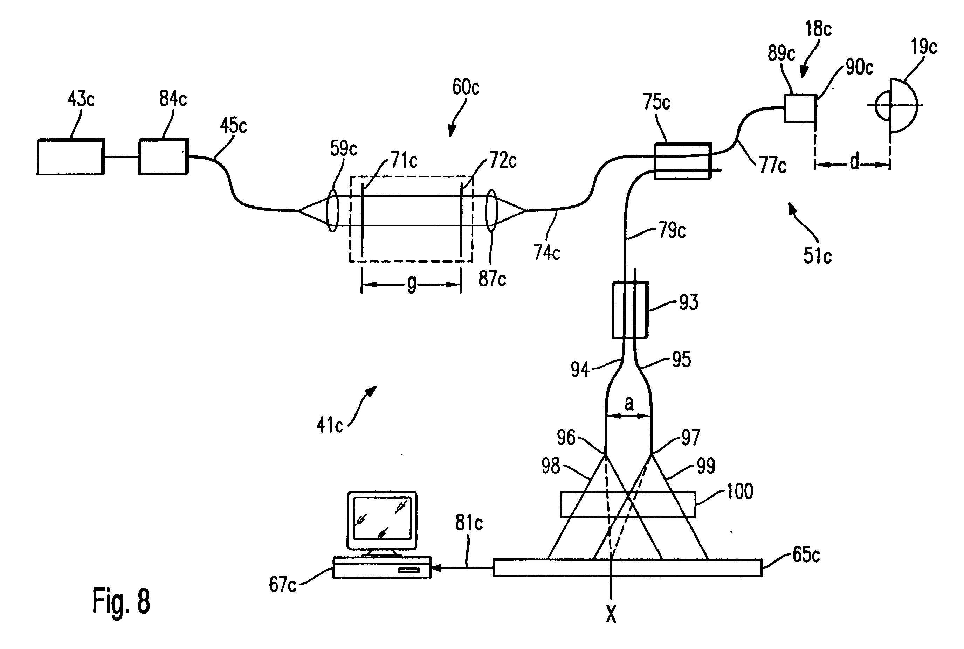

Ein in Fig. 8 dargestelltes Interferometersystem 41c weist im wesentlichen den gleichen Aufbau auf, wie das in Fig. 7 dargestellte Interferometersystem. Im Unterschied hierzu wird die aus einem Messzweig 51c zurückkommende Strahlung jedoch über einen Strahlungsteil 75c und eine daran angeschlossene Lichtleitfaser 79c nicht unmittelbar einem Fotosensor 65c zugeführt. Es wird vielmehr die in der Lichtleitfaser 79c in Richtung zu dem Detektor 65c verlaufende Strahlung durch einen weiteren Strahlteiler 93 auf zwei Lichtleitfasern 94 und 95 aufgeteilt, deren Faserenden 96 und 97 mit einem vorbestimmten Abstand a voneinander angeordnet sind und die in ihnen geführte Strahlung zu dem Fotodetektor 65c hin emittieren, welcher hier als ein ortsauflösender Zeilendetektor ausgebildet ist und mit Abstand von den Faserenden 96, 97 angeordnet ist. Von den Faserenden 96 und 97 wird die Strahlung jeweils als Kugelwelle in einem Konus 98 und 99 auf den Zeilendetektor 65 emittiert, wobei zwischen den Faserenden 96 bzw. 97 und dem Detektor 65c eine parallel zu der Zeilenrichtung des Detektors 65c orientierte Zylinderlinse 100 angeordnet ist, um die Strahlung in einer Richtung quer zu Zeilenrichtung des Detektors auf diesen zu fokussieren.

Der Rechner 76c erfasst über die Datenleitung 81c die Orte, an denen Intensitätsmaxima bzw. Intensitätsminima auf dem Zeilendetektor 65c entstehen.

Sind die Länge g der Vorrichtung 60c zum Bereitstellen der änderbaren optischen Weglänge und der Abstand d zwischen der Emitter-Empfänger-Baugruppe 18c und dem Retroreflektor 19c genau gleich, entsteht auf dem Detektor 65c ein Intensitätsmaximum an einem Ort, der, bei identischer Länge der beiden Fasern 94 und 95, symmetrisch zu den beiden Faserenden 96 und 97 angeordnet ist. Besteht jedoch zwischen der Länge g und dem Abstand d ein kleiner Unterschied, so ist das entsprechende Intensitätsmaximum von dem symmetrisch bezüglich der Faserenden 96, 97 angeordneten Ort verlagert, wie dies mit dem Ort X in Fig. 8 schematisch dargestellt ist. Die Größe der Verlagerung weg von dem symmetrischen Ort ist dabei weiter von dem Abstand a der beiden Faserenden 96, 97 voneinander abhängig und ist um so grösser, je geringer der Abstand zwischen den Faserenden 96, 97 ist.

Sind die drei Retroreflektoren 19c mit unterschiedlichen Abständen d von der Emitter-Empfänger-Baugruppe 18c angeordnet, so entstehen auf dem Zeilendetektor 65c mehrere benachbart zueinander angeordnete Intensitätsmaxima, welche gleichzeitig von dem Rechner 67c erfasst werden können. Somit kann der Rechner 67c ohne Änderung der Länge g und damit ohne Betätigung des Antriebs der Vorrichtung 60c zur Bereitstellung der änderbaren optischen Weglänge gleichzeitig die mehreren Abstände d der Reflektoren von der Baugruppe 18 erfassen.

Es kann auch eine in Fig. 8 nicht dargestellte Vorrichtung zur Halterung der Faserenden 96, 97 vorgesehen sein, bei welcher der Abstand a von dem Rechner 67c motorisch gesteuert änderbar ist. Weisen die verschiedenen Abstände d kleine Unterschiede voneinander auf, so wird ein kleiner Abstand a eingestellt, um die Auflösung der Abstandsmessung zu erhöhen. Unterscheiden sich die verschiedenen Abstände d um größere Werte voneinander, so daß die entsprechenden Intensitätsmaxima bei dem kleinen Abstand a nicht gleichzeitig auf dem Detektor 65c entstehen, so wird der Abstand a erhöht, um die Abstände, bei verminderter Auflösung, gleichzeitig erfassen zu können.

Wie aus Fig. 1 ersichtlich ist, ist der Rechner 67 und ein Großteil der Komponenten des Interferometersystems 41 neben der Werkzeugmaschine 1 angeordnet. Lediglich ein Teil der Interferometeranordnung 41, nämlich deren Meßzweig, ist an der Werkzeugmaschine 1 angeordnet, um die Meßstrahlung der Emitter-Empfänger-Baugruppe 18 zuzuführen. Hierzu tritt die Lichtleitfaser 53 in den fest mit dem Boden verbundenen Sockel 7 der Werkzeugmaschine 1 ein. Von dort wird die Strahlung dann ebenfalls mittels Lichtleiter durch den bewegbaren Arm 9 bis hin zu der Emitter-Empfänger-Baugruppe 18 geführt. Hierbei tritt das Problem auf, daß bei der Strahlführung in dem bewegten Arm 9 mittels herkömmlicher Ein-Moden-Lichtleiter Bewegungen des Lichtleiters zu Änderungen von dessen doppelbrechenden Eigenschaften führen, welche wiederum polarisationsabhängig zu Änderungen der optischen Weglänge in dem Lichtleiter führen. Da in solchen Situationen bei derartigen Lichtleitern auch Änderungen des Polarisationszustands des darin geführte Lichts auftreten, können bei Durchlaufen des Lichtleiters in Richtung hin zu dem Emitter und zurück von dem Empfänger derartige Phasenunterschiede zwischen den beiden Polarisationsrichtungen auftreten, daß sich das Licht des einen Polarisationszustands und das Licht des anderen Polarisationszustands bei der späteren Verarbeitung der Strahlung in der Interferometeranordnung sogar gegenseitig zur Interferenz auslöschen können. Deshalb ist vorgesehen, die Strahlung in dem bewegten Teil der Werkzeugmaschine 1 nicht in einem herkömmlichen Ein-Moden-Leiter zu führen sondern hierzu einen polarisationserhaltenden Lichtleiter einzusetzen.

Dies ist schematisch in Fig. 10 dargestellt. Der mit gestrichelten Linien dargestellte Kasten 1 symbolisiert die Werkzeugmaschine 1 als Ganzes, d.h. inklusive ihrer gegenüber den restlichen Komponenten des Interferometersystems 41 bewegten Teile, und der mit gestrichelten Linien dargestellte Kasten 7 symbolisiert den gegenüber den restlichen Teilen der Interferometeranordnung 41 ruhenden Sockel der Werkzeugmaschine 1. Die Strahlung wird dem ruhenden Sockel 7 über den Lichtleiter 53 zugeführt. In dem Sockel 7 ist ein fest mit diesem verbundener Faserkoppler 101 vorgesehen, der die über den Lichtleiter 53 zugeführte Strahlung in eine polarisationserhaltende Faser 103 an deren einem Ende 102 einkoppelt. Die Faser 103 führt die Strahlung dann in dem bewegten Arm 9 der fest mit einem Teil des bewegten Arms 9 verbundenen Emitter-Empfänger-Baugruppe 18 zu, die an das objektseitige Ende 105 der Faser 103 angekoppelt ist.

Die Baugruppe 18 umfasst eine Kollimationsoptik 109, um einen emittierten Strahl 111 zu formen. Vor der Kollimationsoptik 109 ist eine Viertelwellenplatte 113 angeordnet, die der Strahl 111 nach Verlassen der Optik 109 durchläuft. Der Strahl 111 wird an dem Reflektor 19 reflektiert, durchläuft die Viertelwellenplatte 113 erneut und wird über die Kollimationsoptik 109 wieder in die polarisationserhaltende Faser 103 eingekoppelt. Die von dem Reflektor 9 zurückgeworfene Strahlung durchläuft den Leiter 103, wird an der Schnittstelle 101 in die Faser 53 eingekoppelt und gelangt zu den restlichen Komponenten des Interferometersystems 41 zur weiteren Verarbeitung.

Beim Eintritt in die polarisationshaltende Faser 103 an deren Faserende 102 erfolgt eine Zerlegung des durch die Faser 53 zugeführten unpolarisierten Lichts in dessen beide Polarisationsrichtungen, welche durch die Faser 103 in separaten Polarisationskanälen bis zu dem anderen Faserende 105 transportiert werden. Hierbei tritt ein Übersprechen von einem Polarisationskanal zu dem anderen Polarisationskanal im wesentlichen nicht auf. Eine durch einen ersten der beiden Polarisationskanäle durch die Faser 103 transportierte Strahlungskomponente erfährt auf Grund des zweimaligen Durchlaufens der Viertelwellenplatte 113 eine vollständige Polarisationsdrehung, so daß sie auf ihrem Rückweg durch die Faser 103 deren anderen zweiten Polarisationskanal durchläuft. Umgekehrt durchläuft die zweite Polarisationskomponente des eintretenden Lichts auf dem Hinweg den anderen zweiten Polarisationskanal zuerst und auf dem Rückweg dann den ersten Polarisationskanal.

Beide Polarisationskomponenten der über den Lichtleiter 53 zugeführten umpolarisierten Strahlung durchlaufen somit nacheinander zuerst den einen und dann den anderen Polarisationskanal. Selbst wenn die beiden Polarisationskanäle jeweils unterschiedliche optische Weglängen in dem polarisationserhaltenden Lichtleiter 103 bereitstellen, so durchlaufen sie in der Summe jedoch beide den im wesentlichen identischen gesamten optischen Weg durch den Lichtleiter 103. Deshalb entstehen auch im wesentlichen keine Phasenunterschiede zwischen den beiden Polarisationskomponenten, und die vorangehend beschriebene Signalauslöschung auf Grund solcher Phasenunterschiede tritt bei dem Einsatz der polarisationserhaltenden Faser 103 in den bewegten Teilen der Werkzeugmaschine 1 nicht auf.

Das vorangehend im Zusammenhang mit einem Abstandssensor beschriebene Konzept des Einsatzes der polarisationserhaltenden Faser in einer Situation, in der die beiden Faserenden 102 und 105 relativ zueinander bewegt werden, ist nicht auf den Abstandssensor beschränkt. Es ist auch für andere Sensortypen einsetzbar, bei denen Licht über einen Lichtleiter einem Sensorkopf sowohl zugeführt als auch von diesem zur weiteren Auswertung zurückgeführt wird. Es kann sich hierbei um einen Sensor allgemeiner Art handeln, bei dem die zugeführte Strahlung mit irgendeinem geeigneten Medium, eine Oberfläche oder einem Probenvolumen in Wechselwirkung tritt, eine Änderung der Strahlungseigenschaften erfährt, welche sodann, nach Zurückführung der Strahlung durch den selben Lichtleiter, analysiert werden. Es kann dies beispielsweise ein Drucksensor, ein Spannungssensor, ein Temperatursensor ein Sensor für elektrische oder magnetische Felder oder ein Sensor sein, der das Vorhandensein von Chemikalien oder ähnlichem erfasst.

Weiter ist dieses Konzept auch auf Strahl Zu- und Abführungen anwendbar, bei denen der strahlungszuführende bzw. strahlungsabführende Lichtleiter 103 nicht lediglich Bewegungen unterworfen ist. Es gibt nämlich auch andere Umwelteinflüsse, welche bei der herkömmlichen Ein-Moden-Faser zu Signalstörungen führen. Dies sind beispielsweise Druck, Temperatur, starke elektrische oder magnetische Felder, chemische Einflüsse und dergleichen. Auch gegenüber derartigen Umwelteinflüssen ist die polarisationserhaltende Faser 103 weitgehend stabil. Somit ist dieses Konzept auch einsetzbar, wenn ein optischer Sensor eingesetzt wird, wobei der strahlungszuführende bzw. -abführende Lichtleiter ein Umfeld durchsetzt, welches auf Grund von Einflüssen wie Temperatur, Druck und ähnlichem die Signalübertragung beeinflussen würde.

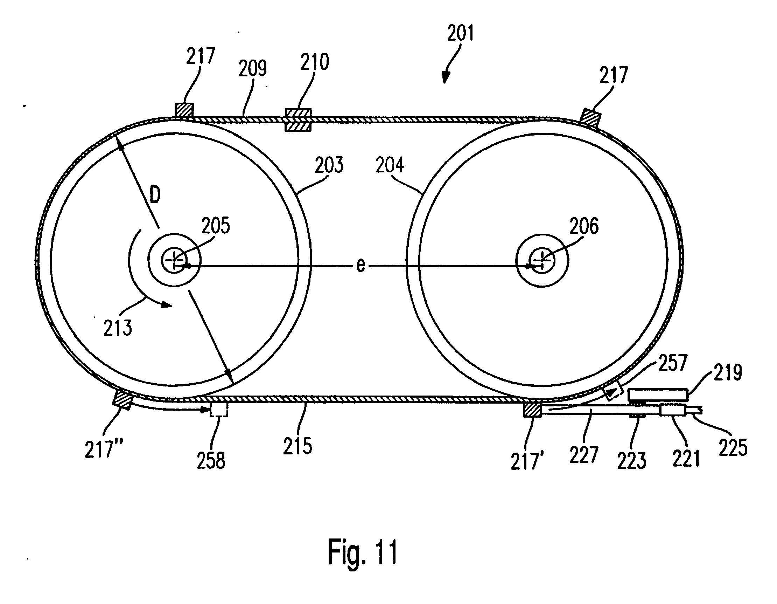

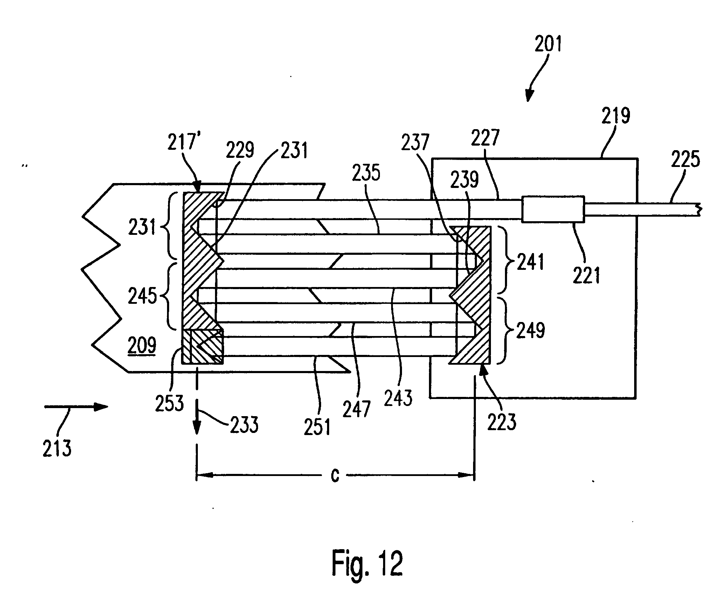

Fig. 11 zeigt eine Vorrichtung zum Bereitstellen einer änderbaren optischen Weglänge bzw. zum Bereitstellen einer änderbaren optischen Verzögerung ("Optical delay") in Form eines Riemenscanners 201 in Draufsicht. Fig. 12 zeigt eine teilweise Seitenansicht des Riemenscanners 201. Der Riemenscanner 201 umfasst zwei Riemenscheiben 203 und 204 mit jeweils gleichen Durchmessern D und Drehachsen 205 bzw. 206, welche parallel zueinander und mit einem Abstand e voneinander angeordnet sind. Die oberen Stirnseiten der beiden Scheiben 203, 204 liegen in einer gemeinsamen Ebene, und um die Umfangsflächen der beiden Scheiben ist ein Ringriemen 209 geführt. Die Länge des Ringriemens 209 und der Abstand e der beiden Scheibenachsen 205 und 206 sind derart aufeinander abgestimmt, daß der Riemen 209 in seiner Umfangsrichtung unter mechanischer Spannung steht und somit fest an den Umfangsflächen der Scheiben 203, 204 anliegt. Die Scheibe 203 ist durch einen in Fig. 11 nicht dargestellten Antrieb, wie etwa ein Motor, in einer Richtung 213 um ihrer Drehachse 205 antreibbar, so daß ebenfalls der Riemen 209 und die andere Scheibe 204 in die gleiche Richtung angetrieben werden.

Ein Arbeitsbereich 215 des Riemenscanners 201 ist in einem Bereich des Riemens gebildet, in welchem dieser sich geradlinig von der Scheibe 203 zur Scheibe 204 in Richtung 213 erstreckt. In diesem Bereich erstreckt sich der Riemen entlang einer Tangente, die den Umfangsflächen der Scheiben 203 und 204 gemeinsam ist.

An dem Riemen 209 sind vier Spiegelanordnungen 217 festgemacht, welche in Umfangsrichtung des Riemens 209 mit jeweils gleichem Abstand voneinander angeordnet sind. In der Darstellung der Fig. 11 ist eine mit 217 bezeichnete Spiegelanordnung im Arbeitsbereich 215 angeordnet. Außer dieser Spiegelanordnung 217 sind keine weiteren Spiegelanordnungen 217 in dem Arbeitsbereich angeordnet.

Neben der Riemenscheibe 204 ist eine Halterung 219 fest bezüglich der Drehachsen 205, 206 angeordnet und trägt eine Strahlführungseinrichtung 221 sowie eine Spiegelanordnung 223.

Der Strahlführungseinrichtung 221 wird mittels eines Lichtleiters 225 die Strahlung einer Lichtquelle zugeführt.

Die Strahlführungseinrichtung 221 enthält eine in den Figuren 11, 12 nicht dargestellte Kollimationsoptik, um einen parallelisierten Lichtstrahl 227 parallel zur Richtung des Riemens 209 in dem Arbeitsbereich 215 derart zu emittieren, daß er die in dem Arbeitsbereich 215 angeordnete Spiegelanordnung 217 trifft. An der Spiegelanordnung 217 trifft der Strahl 227 zunächst auf einen unter 45° zur Richtung des Strahls 227 angeordneten Spiegel 229, der den Strahl 227 um 90° umlenkt und auf einen weiteren Spiegel 231 lenkt, der mit dem Spiegel 229 einen Winkel von 90° einschließt. Die beiden Spiegel 229 und 231 wirken als ein Reflektor 233, der den Strahl 227 parallel zu dessen ursprünglichen Strahlrichtung, jedoch in eine Richtung 233 parallel zu dieser versetzt, derart zurückwirft, daß er auf die bezüglich der Strahlführungseinrichtung 221 festangeordnete Spiegelanordnung 223 trifft. Die Richtung 233 ist orthogonal zu der Bewegungsrichtung 213 des Riemens 209 in dem Arbeitsbereich 215 und parallel zu der Oberfläche des Riemens 209 in dem Arbeitsbereich 215 orientiert.

Der Strahl 235 trifft an der Spiegelanordnung 223 zunächst auf einen durch zwei Spiegelflächen 237 und 239 gebildeten Reflektor 241, welcher den Strahl 235 um ein weiteres Stück in die Richtung 233 versetzt zu der Spiegelanordnung 217 zurückwirft, wo der Strahl 243 durch einen weiteren Reflektor 245, der ebenfalls zwei unter 90° zueinander angeordnete Spiegelflächen umfasst, als ein Strahl 247 wieder in Richtung zu der Spiegelanordnung 223 zurückreflektiert wird. Dort trifft der Strahl 247 auf einen weiteren durch zwei Spiegelflächen gebildeten Reflektor 249, der den Strahl 247 nochmal parallel versetzt und umlenkt und als Strahl 251 in Richtung zu der Reflektoranordnung 217 lenkt. Dort trifft der Strahl 251 auf einen Retroreflektor 253, welcher aus drei paarweise orthogonal zueinander angeordneten Spiegelflächen aufgebaut ist damit den Strahl 251 genau in sich selbst zurückwirft. Der von dem Retroreflektor 253 in sich selbst zurückgeworfene Strahl trifft dann nacheinander auf die Reflektoren 249, 245, 241 und 231, woraufhin er durch die Kollimationsoptik der Strahlführungseinrichtung 221 wieder in die Lichtfaser 225 eingekoppelt wird.

Aufgrund der mehrfachen Hin- und Her-Reflexion zwischen der an dem Riemen 209 angebrachten Spiegelanordnung 217 und der fest angebrachten Spiegelanordnung 223 durchläuft der Strahl zwischen seiner Emission durch die Strahlführungseinrichtung 221 und seinen erneuten Eintritt in dieselbe einen optischen Weg, der etwas mehr als dem Zehnfachen des Abstands c entspricht, mit dem die beiden Spiegelanordnungen 217 und 223 voneinander angeordnet sind.

Bewegt sich die Spiegelanordnung in 217 von dem Beginn des Arbeitsbereichs 215 bis zu dessen Ende, so ändert sich die optische Weglänge des Strahls zwischen Austritt und Eintritt aus bzw. in die Strahführungseinrichtung 221 um einen Wert, der dem Zehnfachen der Länge des Arbeitsbereichs 215 entspricht.

Der maximale Hub, d.h. die maximale Änderung der optischen Weglänge, des Riemenscanners 201 weist demnach ein Wert auf, der dem Zehnfachen des Abstands e der beiden Achsen 205 und 206 voneinander entspricht.

Ist die Spiegelanordnung 217 im Arbeitsbereich 215 angeordnet, so weist die Spiegelanordnung 217 , welche bei Bewegung des Riemens 209 in Richtung 213 als nächstes in den Arbeitsbereich 215 gelangt, einen solchen Abstand auf, daß die Spiegelanordnung 217 genau dann im Arbeitsbereich angeordnet ist, wenn die vorauslaufende Spiegelanordnung 217 diesen gerade verlassen hat. Eine solche Situation ist in Fig. 11 mit gestrichelter Linie dargestellt, wobei die Spiegelanordnung 217, wenn sie den Arbeitsbereich 215 gerade verlassen hat, mit dem Bezugszeichen 257 bezeichnet ist und die Spiegelanordnung 217 unmittelbar nach ihrem Eintreten in den Arbeitsbereich 215 mit dem Bezugszeichen 258 bezeichnet ist.

Bei Bewegung der Spiegelanordnung 217 in Richtung 213 bewegt sich diese nach Verlassen des Arbeitsbereichs 215 entlang einer Kreisbahn um die Scheibe 204. Dies bedeutet, daß während einer gewissen Zeitdauer die Spiegelanordnung 217 zwar den Arbeitsbereich 215 verlassen hat, jedoch den Strahl 227 noch geometrisch abschattet, so daß die Strahlführung in dem optischen Scanner 201 unterbrochen ist. Während dieser Zeit kann der optische Scanner 201 keine optische Weglänge bereitstellen. Dies ist gewissermassen eine Totzeit, die den Tastgrad der Vorrichtung 201 kleiner als 1 macht. Diese Totzeit kann allerdings dazu verwendet werden, um eine Elektronik, die eine Auswertung des verzögerten optischen Signals vornimmt, zurückzusetzen oder andere Umschaltungen vorzunehmen.

Sobald die Spiegelanordnung 217 dann weit genug um die Umfangsfläche der Scheibe 204 bewegt ist, gibt die Spiegelanordnung 217 den Strahl 227 wieder frei, so daß dieser auf die der Spiegelanordnung 217 nachlaufende Spiegelanordnung 217 trifft und von dieser genau so reflektiert wird, wie dies vorangehend bereits für die Spiegelanordnung 217 beschrieben wurde.

Um im Hinblick auf die wenigstens aufgrund der Abschattung entstehende Totzeit möglichst den gesamten zur Verfügung stehenden Hub, d.h. die maximale änderbare optische Weglänge nutzen zu können, ist der Abstand zwischen in Umfangsrichtung des Bands 209 aufeinanderfolgenden Spiegelanordnungen 217 etwas größer eingestellt als der zur Verfügung stehende Hub. Dies erfolgt bei den in den Figuren 11 und 12 dargestellten Riemenscanner 201 dadurch, daß der Durchmesser D der Riemenscheiben 203, 204 zu 165 mm gewählt ist und das Verhältnis der Achsabstände e zu Scheibendurchmesser e/D zu 1,34 gewählt ist.

Das Band 209 ist in der beschriebenen Ausführungsform ein Stahlband aus Invar-Stahl, d.h. einem Stahl, der einen geringen thermischen Ausdehnungskoeffizienten aufweist. Ferner ist an dem Scanner 201 noch wenigstens eine mit 210 bezeichnete Führungseinrichtung vorgesehen, welche das Band wenigstens in axialer Richtung der Scheiben 203, 204 führt, so daß es sich in einer stabilen Lage um die Scheiben 203, 204 bewegt. Der Antrieb treibt die Riemenscheibe 203 mit einer solchen Geschwindigkeit an, daß sich das Band mit einer Geschwindigkeit von 10 Meter pro Sekunde in Umfangsrichtung 213 bewegt.

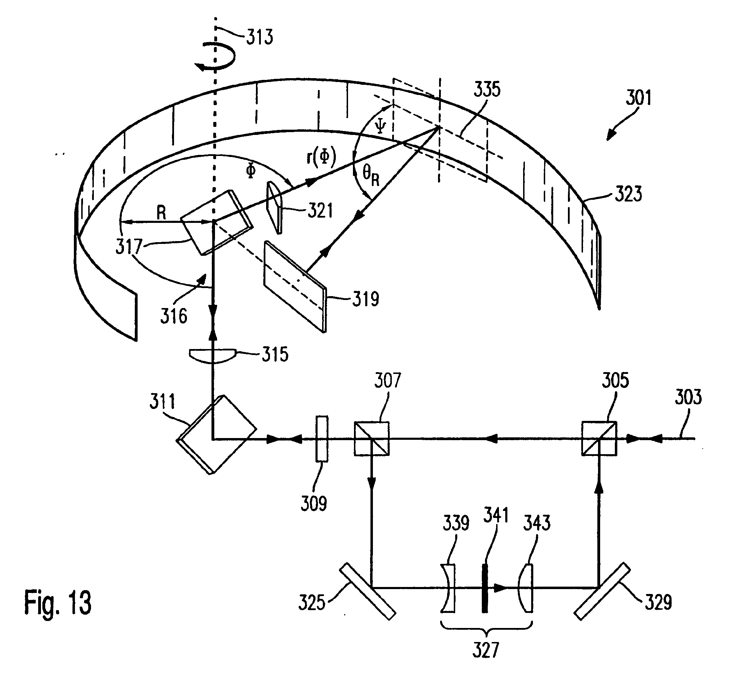

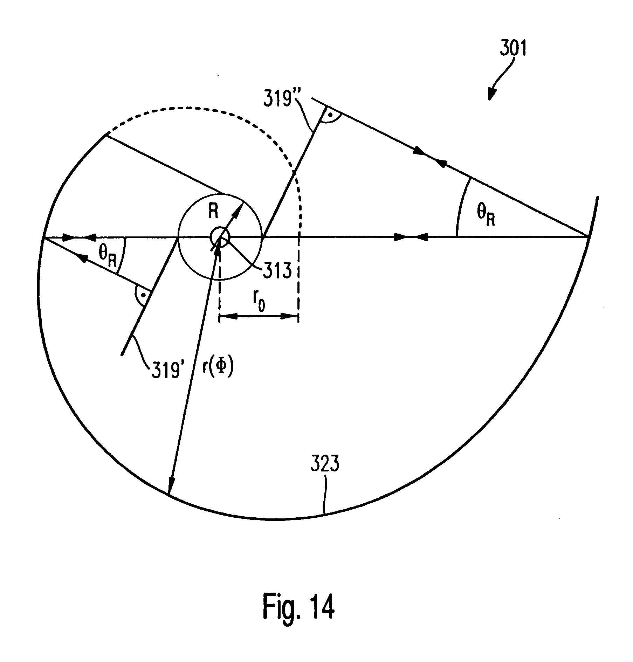

In den Figuren 13 und 14 ist eine Variante für eine Vorrichtung zum Bereitstellen einer änderbaren optischen Weglänge dargestellt, welche als Spiralscanner 301 ausgebildet ist.

Dem Spiralscanner 301 wird ein Lichtstrahl 303 zugeführt, welcher zunächst einen ersten polarisierenden Strahlteiler 305 und sodann einen zweiten polarisierenden Strahlteiler 307 jeweils geradlinig durchläuft. Nach Durchlaufen einer Viertelwellenplatte 309 trifft der Strahl dann auf einen bezüglich der beiden Strahlteiler fest angeordneten Spiegel 311, welcher den Strahl etwa um 90° ablenkt, so daß er parallel zu einer Drehachse 313 verläuft. Nach Reflexionen an dem Spiegel 311 durchläuft der Strahl noch eine Kollimationslinse 315, welche den Strahl derart formt, daß er als Parallelstrahl auf der Drehachse 313 und in Figur 13 in Richtung nach oben weiterverläuft.

Der Spiralscanner 301 umfasst weiter eine Baugruppe 316, welche aus den folgenden mit fester räumlicher Beziehung zueinander angeordneten Komponenten aufgebaut ist, nämlich einem Umlenkspiegel 317, einem Planspiegel 319 und einer Zylinderlinse 321. Die Baugruppe 316 ist als Einheit um die Achse 313 rotierbar angeordnet, wobei sie durch einen in den Figuren 13 und 14 nicht dargestellten Antrieb in Drehung versetzt wird.

Der Spiralscanner 301 umfasst weiterhin einen Spiralspiegel 323, dessen Spiegelfläche sich spiralförmig um die Drehachse 313 erstreckt.

Der Umlenkspiegel 317 der rotierenden Baugruppe 316 ist derart auf der Drehachse 313 angeordnet, daß er den die Kollimationslinse 315 verlassenden Strahl um 90° und auf die Spiegelfläche des Spiralspiegels 323 lenkt, wobei der Strahl zwischen seiner Umlenkung an dem Umlenkspiegel 317 und seinem Auftreffen auf dem Spiralspiegel 323 noch die Zylinderlinse 321 durchläuft. Nach Auftreffen auf dem Spiralspiegel 323 wird der Strahl hin zu dem Planspiegel 319 der rotierenden Baugruppe 316 reflektiert, welcher immer orthogonal zu dem auf ihn treffenden Strahl ausgerichtet ist, so daß er den Strahl in sich selbst zurück auf den Spiralspiegel 323 wirft. Von diesem wird der Strahl dann nach erneutem Durchlaufen der Zylinderlinse 321 zurück auf den Umlenkspiegel 317 reflektiert, welcher den Strahl dann auf der Drehachse 313 nach unten verlaufend orientiert. Der zurücklaufende Strahl durchsetzt dann die Kollimationslinse 315, wird von dem Spiegel 311 umgelenkt, durchläuft die Viertelwellenplatte 309 und wird dann von dem polarisierenden Strahlteiler 307 um 90° abgelenkt, trifft auf einen weiteren 90°-Umlenkspiegel 325, durchsetzt eine Strahlformungsbaugruppe 327, wird von einem weiteren 90°-Umlenkspiegel 329 dem polarisierenden Strahlteiler 305 zugeführt, welcher den zurücklaufenden Strahl dann so ausrichtet, daß er im wesentlichen kolinear zu dem einfallenden Strahl 303 verläuft.

Je nach Drehstellung der Baugruppe 316 stellt der Spiralscanner 301 eine unterschiedliche optische Weglänge bereit. Dies ist in Fig. 14 nochmals erläutert: Diese zeigt zwei Drehstellungen der rotierenden Baugruppe, wobei der Planspiegel 319 in der einen Drehstellung mit 319 und in der anderen Drehstellung mit 319 bezeichnet ist.

Die Gestalt des Spiralspiegels 323 ist als eine logarithmische Spirale gewählt, so daß in Abhängigkeit von einem Umfangswinkel φ der Abstand der Spiegelfläche von der Drehachse 313 folgende Gleichung genügt:

$$r(\varphi) = r0 \exp(\varphi \cot \psi),$$

wobei r0 der kleinste zur Verfügung stehende Abstand zwischen Spiegelfläche 323 und Achse 313 ist.

Hierbei ist $\cot \psi$ konstant, so daß auch der Winkel $\psi$ konstant ist. Der Winkel $\psi$ ist in Fig. 13 dargestellt und beschreibt den Winkel zwischen den auf den Spiralspiegel 323 treffenden Strahl und einer Tangente 335 an die Spirale des Spiegels 323.

Da der Winkel $\psi$ unabhängig von der Drehstellung der Baugruppe 316 um die Drehachse 313 ist, trifft der Strahl immer unter dem gleichen Winkel auf die Oberfläche des Spiralspiegels 323 und wird damit auch immer um den gleichen Winkel abgelenkt.

Der Winkel zwischen dem auf den Spiralspiegel 323 treffenden Strahl und dem von diesem zurückgeworfenen Strahl ist mit θR bezeichnet und ist ebenfalls unabhängig von der Drehstellung. Dies bedeutet weiter, daß der von dem Spiralspiegel 323 reflektierte Strahl auch unabhängig von der Drehstellung immer unter einem gleichem Winkel von 90° auf den Planspiegel 319 fällt, da dieser derart ausgerichtet ist, daß der auf ihn treffende Strahl in sich selbst zurück reflektiert wird. Durch die Wahl der Spiegelgestalt als Spiralspiegel ist somit gewährleistet, daß der in den Scanner 301 eintretende Strahl im wesentlichen in sich zurückreflektiert wird.

Da der auf den Spiralspiegel 323 treffende Strahl eine gewisse Ausdehnung quer zu seiner Strahlrichtung aufweist und die Fläche des Spiralspiegels 323 nicht orthogonal zu dieser Strahlrichtung orientiert ist, erfährt der Strahl zwischen Eintritt und Austritt in den Spiralscanner 301 eine optische Weglänge, die nicht über den ganzen Strahlquerschnitt genau konstant ist. Aus diesem Grund ist auch die Strahlformungsbaugruppe 327 vorgesehen, um hieraus resultierende Effekte zu begrenzen. Die Strahlformungsbaugruppe 327 umfasst eine Zerstreuungslinse 339, eine Lochblende 341 und eine fokussierende Linse 343.

Die rotierende Baugruppe 316 ist dynamisch ausgewuchtet, so daß sie selbst bei hohen Umdrehungsgeschwindigkeiten und damit schnellen Änderungen der optischen Weglänge einen ruhigen und präzisen Lauf aufweist.

Die vorangehend beschriebenen Vorrichtungen 201 und 301 zum Bereitstellen einer änderbaren optischen Weglänge sind in jeder möglichen Anwendung einsetzbar, bei der eine änderbare optische Weglänge bzw. eine einstellbare optische Verzögerung bereitgestellt werden soll. Insbesondere kommt hier ein Einsatz in einem Interferometer und weiter bevorzugt in einem Weißlicht-Interferometer in Frage. Bevorzugterweise werden die Vorrichtungen 201 und 203 auch in dem System zum Bestimmen der Position oder/und Orientierung zweier Objekte eingesetzt, wie es vorangehend im Zusammenhang mit den Figuren 1 bis 10 erläutert wurde.

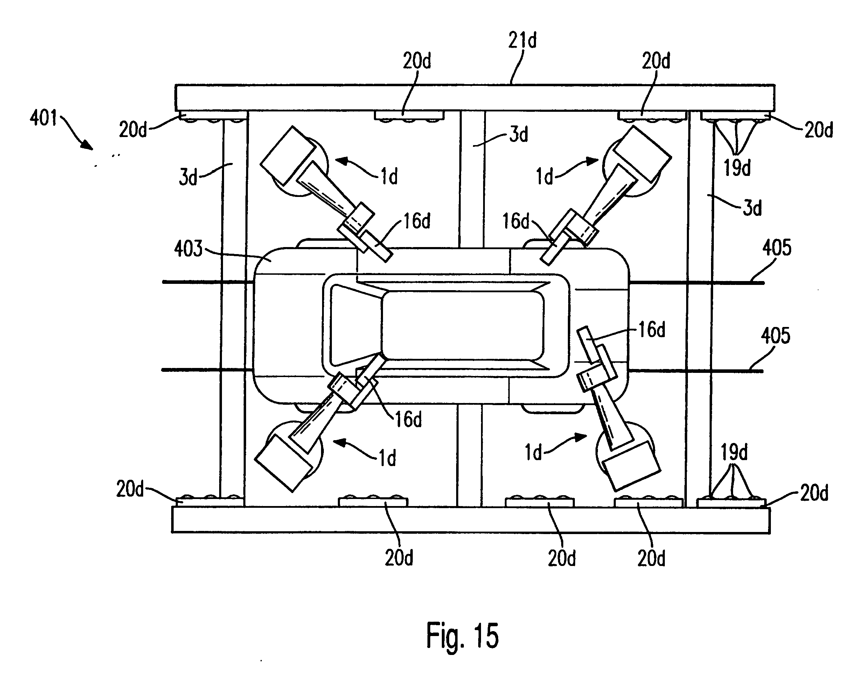

Fig. 15 zeigt eine Variante der in Fig. 1 gezeigten Werkzeugmaschine. Hier ist eine Fertigungsstrasse 401 zur Herstellung eines Automobils 403 schematisch dargestellt. Hinsichtlich ihres Aufbaus und ihrer Funktion einander entsprechende Komponenten sind mit den Bezugszahlen der Figuren 1 bis 10 bezeichnet, zusätzlich jedoch mit einem ergänzenden Buchstaben versehen. Zur Erläuterung wird jeweils auf die gesamte vorangehende Beschreibung Bezug genommen.

Das zu bearbeitende Werkstück ist hierbei das Automobil 403 welches auf einer Werkstückhalterung 3d, welche auch Schienen 405 umfasst, durch die Fertigungsstrasse 401 bewegt wird. Zur Bearbeitung des Werkstücks sind vier Werkzeugmaschinen 1d vorgesehen, welche mit ihren Werkzeugen 16d jeweils Bearbeitungen an dem Werkstück 403 vornehmen. Die Werkzeuge 16d werden durch die jeweilige Werkzeugmaschine 1d in einem vergleichsweise grossen Volumen bewegt. Jedes Werkzeug 16d weist drei Emitter-Empfänger-Baugruppen auf, welche allerdings in Fig. 15 nicht dargestellt sind. Diese dienen zur Bestimmung sowohl der Position als auch der Orientierung der Werkzeuges 16d bezüglich der Werkstückhalterung 3d. Das zugehörige Meßsystem umfasst entsprechend eine Mehrzahl von Platten 20d, welche fest mit der Werkstückhalterung 3d über Träger 21d verbunden sind. Eine jede der Platten 20d trägt drei Retroreflektoren 19d, welche, wie in Fig. 1 dargestellt, Strahlen zurück zu den Emitter-Empfänger-Baugruppen reflektieren, die an den Werkzeugen 16d angebracht sind. Allerdings arbeitet die Emitter-Empfänger-Baugruppe an einem jeden Werkzeug 16d nicht mit lediglich einer Retroreflektorengruppe 20d zusammen sondern hat hierfür eine Mehrzahl solcher Retroreflektorengruppen zur Auswahl, welche an vorbestimmten bekannten Positionen an den Halterungen 21d angebracht sind. Es kann sich nun, je nach momentaner Position des Werkzeugs 16d in dem zugänglichen Arbeitsvolumen, herausstellen, das eine genauere Bestimmung von Position und Orientierung des Werkzeugs 16d bezüglich der Werkstückhalterung 3 möglich ist, indem für die Abstandsbestimmung eine bestimmte Reflektorengruppe 20d ausgewählt wird, welche günstig relativ zu dem Werkzeug 16d angeordnet ist.

Aufgrund der Vielzahl der um die Werkzeugmaschinen 1d angeordneten Reflektorenbaugruppen 20d befindet sich immer eine Reflektorenbaugruppe 20d im Blickfeld einer jeden Emitter-Empfänger-Baugruppe, so daß eine Abstandsbestimmung für das entsprechende Werkzeug 16d mit ausreichender Präzision möglich ist.

In den vorangehenden Ausführungsbeispielen wurde jeweils eine Emitter-Empfänger-Baugruppe beschrieben, um die beiden Funktionen Aussenden der Strahlung in den Raumwinkelbereich hin zu den Retroreflektoren und Empfangen der von den Retroreflektoren zurückreflektierten Strahlung zu erfüllen. Es ist jedoch auch möglich, für die beiden Funktionen jeweils separate Komponenten vorzusehen. So ist es beispielsweise möglich, die Fig. 3 dargestellte Ausführungsform derart abzuwandeln, daß im Zentrum der Platte 31 lediglich ein Emitter vorgesehen ist, und daß die in Fig. 3 mit den Bezugszeichen 18, 18 und 18 bezeichneten Komponenten Empfänger für die Strahlung sind. Auch dann ist es möglich, die neun Abstände zwischen den Komponenten 18, 18 und 18 einerseits und den drei Retroreflektoren 19, 19 und 19 andererseits zu bestimmen.

Umgekehrt ist es jedoch auch möglich, daß die in Fig. 3 mit 18, 18 und 18 bezeichneten Komponenten jeweils Emitter sind, die mit festem Abstand zueinander angeordnet sind, und daß zentral in der Platte 31 ein einziger Empfänger vorgesehen ist, um die neun benötigten Abstände zu bestimmen.

Bei der in den Figuren 11 und 12 dargestellten Ausführungsform ist als umlaufender Riemen 209 ein Stahlband eingesetzt. Es ist jedoch auch möglich, andere Materialien für den umlaufenden Riemen auszuwählen. Beispiele sind hier Kunststoffe und faserverstärkte Kunststoffe, Gummi usw.

Die Führung des Riemens bezüglich der Riemenscheiben erfolgt bei der Ausführungsform gemäß den Figuren 11 und 12, wie beschrieben, durch ein oder mehrere den Riemen wenigstens teilweise umgreifende Führungen. Es ist jedoch auch möglich, daß der Riemen ein solches Querschnittsprofil aufweist, welches Vorsprünge oder Ausnehmungen oder ähnliches aufweist, welche mit an den Umfangsflächen der Scheiben vorgesehenen Ausnehmungen und Vorsprüngen so korrespondiert, daß diese ineinander eingreifen und damit eine Führung des Riemens unmittelbar an der Umfangsfläche der Scheiben möglich ist. Ein Beispiel hierfür wäre die Ausführung des Riemens als Keilrippenriemen mit einem Rippenprofil, wie es beispielsweise in der deutschen Industrie Norm DIN 7867 beschrieben ist.

Vorangehend wurde das System bzw. das Verfahren zum Bestimmen der Position und/oder der Orientierung zweier Objekte relativ zueinander in einer Anwendung auf einer Werkzeugmaschine beschrieben, wobei die beiden Objekte das Werkzeug einerseits und die Werkstückhalterung andererseits sind und wobei die Reflektoren an der Werkstückhalterung angebracht sind. Es ist jedoch auch möglich, die Reflektoren auf Seiten des Werkzeugs und die Emitter bzw. Empfänger auf Seiten der Werkstückhalterung anzubringen. Ferner ist es möglich, das System bzw. das Verfahren auf jegliche andere Paare von Objekten anzuwenden, zwischen denen Abstände bzw. Orientierungen zu bestimmen sind. Insbesondere ist hier ein Koordinatenmeßgerät ins Auge gefasst, mit dem die Oberfläche eines Werkstücks abgetastet wird. Das Werkstück kann auch hier, ähnlich wie bei der Werkzeugmaschine, auf einer Werkstückhalterung angeordnet sein. Ein Tastkopf mit einer Tastspitze zur Antastung der Oberfläche des Werkstücks kann entweder durch eine Mechanik getragen sein, ähnlich wie das Werkzeug der Werkzeugmaschine, wobei es entweder motorisch oder durch die Führung per Hand durch einen Benutzer entlang der Werkstückoberfläche bewegt wird. Es ist jedoch auch möglich, daß der Tastkopf alleine von der Hand des Benutzers getragen wird und frei von diesem entlang der Werkstückoberfläche bewegt wird. Es sind dann entweder an dem Tastkopf die Emitter und die Empfänger angebracht, während die Retroreflektoren an der Werkstückhalterung angebracht sind, oder es sind die Retroreflektoren an dem Tastkopf angebracht während die Emitter und Empfänger an der Werkstückhalterung angebracht sind.

**Patentansprüche**

1.  System zum Bestimmen einer Position (x, y, z) zweier Objekte (16,3) relativ zueinander, umfassend:

    - eine Quelle (43) kohärenter Strahlung,
    - ein Strahlführung zur Bereitstellung eines Meßzweigs (49) für einen Meßstrahl, der eine von der Position der beiden Objekte (16,3) abhängige optische Weglänge aufweist,
    - einen Strahlungsintensitätsmesser (65) zum Messen einer Intensität einer interferierenden Überlagerung von Strahlung, die wenigstens Strahlung nach Durchlaufen des Meßzweiges (49) umfaßt, und
    - einen Rechner (67), der auf ein Meßsignal des Strahlungsintensitätsmessers (65) anspricht, um optische Weglängen des Meßzweiges (49) und daraus die Position (x, y, z) der beiden Objekte (16,3) relativ zueinander zu ermitteln,
    wobei der Meßzweig (49) umfaßt:
    - wenigstens einen an einem ersten (16) der beiden Objekte fest anbringbaren Emitter (18) zum Aussenden der dem Meßzweig (49) zugeführten Strahlung in einen Raum zwischen den beiden Objekten (16,3),
    - wenigstens drei an dem zweiten (3) der beiden Objekte derart anbringbare Retroreflektoren (19), daß diese mit festen Abständen relativ zueinander angeordnet sind, und
    - wenigstens einen an dem ersten (3) der beiden Objekte anbringbaren Empfänger (18) zum Empfang von von den Retroreflektoren (19) zurückgeworfener Strahlung und zur Zuführung der empfangenen Strahlung zu dem Strahlungsintensitätsmesser (65),
    wobei der Emitter (18) die Strahlung in einen Raumwinkelbereich aussendet, welcher einen Öffnungswinkel (G) aufweist, der so groß gewählt ist, daß die wenigstens drei Retroreflektoren (19) in dem Raumwinkelbereich enthalten sind.

2.  System nach Anspruch 1, wobei der Emitter und der Empfänger in einer gemeinsamen Baugruppe (18) vereinigt sind.

3.  System nach Anspruch 2, wobei an dem ersten Objekt wenigstens drei Emitter-Empfänger-Baugruppen (18) vorgesehen sind.

4.  System nach Anspruch 1, wobei der Emitter und der Empfänger als voneinander separate Baugruppen ausgebildet und mit festem Abstand relativ zueinander an dem ersten Objekt (3) angebracht sind.

5.  System nach Anspruch 4, wobei an dem ersten Objekt (3) wenigstens drei Emitter-Baugruppen und eine Empfänger-Baugruppe vorgesehen sind.

6.  System nach Anspruch 4, wobei an dem ersten Objekt (3) eine Emitter-Baugruppe und wenigstens drei Empfänger-Baugruppen vorgesehen sind.

7.  System nach einem der Ansprüche 3, 5 und 6, wobei der Rechner (67) ferner dazu vorgesehen ist, um eine Orientierung ($\alpha$, $\beta$, $\gamma$) der beiden Objekte relativ zueinander zu ermitteln.

8.  System nach einem der Ansprüche 3 und 5, wobei ein Umschalter (55) vorgesehen ist, um die Strahlung einer auswählbaren Teilmenge der Emitter zuzuführen.

9.  System nach einem der Ansprüche 3 und 5, wobei einer Teilmenge der Emitter jeweils ein Strahlungsunterbrecher zugeordnet ist, um die dem entsprechenden Emitter zugeführte Strahlung wahlweise zu unterbrechen.

**10.** System nach Anspruch 6, wobei einer Teilmenge der Empfänger jeweils ein Strahlungsunterbrecher (81) zugeordnet ist, um von dem entsprechenden Empfänger dem Strahlungsintensitätsmesser (65) zugeführte Strahlung wahlweise zu unterbrechen.

**11.** System nach einem der Ansprüche 1 bis 10, wobei einer Teilmenge der Retroreflektoren (19) jeweils ein Strahlungsunterbrecher (28) zugeordnet ist, um die von dem entsprechenden Retroreflektor (19) zurückgeworfene Strahlung wahlweise zu unterbrechen.

**12.** System nach einem der Ansprüche 1 bis 11, wobei ferner ein Strahlteiler (47) zum Aufteilen der von der Quelle (43) emittierten Strahlung in einen dem Referenzzweig (51) zugeführten Referenzstrahl und den dem Meßzweig (49) zugeführten Meßstrahl vorgesehen ist und wobei die interferierende Überlagerung ferner Strahlung nach Durchlaufen des Referenzzweigs (51) umfaßt.

**13.** System nach Anspruch 12, wobei der Referenzzweig (51) eine Vorrichtung zur Bereitstellung einer änderbaren optischen Weglänge (60) des Referenzstrahls umfaßt.

**14.** System nach einem der Ansprüche 1 bis 11, wobei zwischen der Quelle (43a) und dem Emitter ein Strahlteiler (47a) zur Aufteilung des Meßstrahls in einen ersten Teilstrahl und einen zweiten Teilstrahl, eine Vorrichtung (60a) zur Bereitstellung einer änderbaren optischen Weglänge für den zweiten Teilstrahl und eine Vorrichtung (71) zum Überlagern des ersten und des zweiten Teilstrahls vorgesehen ist, um diese gemeinsam dem Emitter (18a) zuzuführen.

**15.** System nach einem der Ansprüche 1 bis 14, wobei das erste Objekt (16) relativ zu der Strahlungsquelle (43) bewegbar ist und wobei eine polarisationserhaltende Faser (103) vorgesehen ist, um die Strahlung von der Quelle (43) dem Emitter (18, 109) zuzuführen oder/und von dem Empfänger (18, 109) dem Strahlungsintensitätsmesser (65) zuzuführen.

**16.** System nach Anspruch 15, wobei eine Viertelwellenplatte (113) im Strahlengang zwischen Emitter (109) und Empfänger (109) vorgesehen ist.

**17.** System nach einem der Ansprüche 1 bis 16, ferner umfassend eine Strahlführungsanordnung, welche umfaßt:

eine Lichtleiteranordnung (103) mit einem objektseitigen ersten Ende (105) und einem von dem ersten Ende entgegengesetzten zweiten Ende (102), wobei die Lichtleiteranordnung (103) dazu vorgesehen ist, Licht von dem zweiten Ende (102) zu dem ersten Ende (105) zu transportieren, so daß es dort hin zu einem Objekt (19) emittiert wird, sowie von dem Objekt (19) zurückgeworfenes Licht an dem ersten Ende (105) zu empfangen und zu dem zweiten Ende (102) zu transportieren, und wobei das erste Ende (105) relativ zu dem zweiten Ende (102) bewegbar ist, **dadurch gekennzeichnet, daß** wenigstens ein relativ zu dem zweiten Ende (102) bewegbarer Teil der Lichtleiteranordnung einen polarisationserhaltenden Lichtleiter (103) umfaßt und daß ferner eine Phasenplattenanordnung (103) vorgesehen ist, welche auf das Licht zwischen dessen Emission an dem ersten Ende und dessen Empfang an dem ersten Ende die Wirkung einer Halbwellenplatte aufweist.

**18.** Sytem nach Anspruch 17, wobei vor dem ersten Ende (105) eine Viertelwellenplatte (113) angeordnet ist.

**19.** System nach Anspruch 17 oder 18, wobei das an dem zweiten Ende (102) eintretende Licht unpolarisiertes Licht ist.

**20.** System nach einem der Ansprüche 1 bis 19, ferner umfassend eine Vorrichtung zum Bereitstellen einer änderbaren optischen Weglänge für einen Lichtstrahl, welche umfaßt:

- einen durch wenigstens zwei mit Abstand voneinander angeordnete Rollen (203, 204) gespannten Endlosriemen (209), wobei sich der Riemen (209) in einem Arbeitsbereich (215) entlang einer gemeinsamen Tangente der beiden Rollen (203, 204) im wesentlichen geradlinig erstreckt,
- einen Antrieb zum Antreiben des Endlosriemens (209) in dessen Umfangsrichtung (213),
- wenigstens eine fest an dem Endlosriemen (209) angebrachte und mit diesem um die Rollen (203, 204) umlaufende erste Spiegelanordnung (217),
- eine Strahlführungseinrichtung (221), welche den Lichtstrahl im wesentlichen parallel zu einer Erstreckungsrichtung des Endlosriemens (209) in dem Arbeitsbereich (215) und auf die erste Spiegelanordnung (217) richtet, wenn diese in dem Arbeitsbereich (215) angeordnet ist,

wobei die erste Spiegelanordnung (217) den auf sie gerichteten Lichtstrahl so auf die Strahlführungseinrichtung (221) zurückreflektiert, daß er in diese wieder eintritt,

**dadurch gekennzeichnet, daß**

eine bezüglich der Strahlführungseinrichtung (221) fest angeordnete zweite Spiegelanordnung (223) vorgesehen ist und

die erste und die zweite Spiegelanordnung (217, 223) derart ausgebildet sind, daß der Lichtstrahl zwischen seinem Austritt aus der Strahlführungseinrichtung (221) und Eintritt in diese wenigstens ein Mal zwischen der ersten und der zweiten Spiegelanordnung (217, 223) hin und her reflektiert wird.

21. System nach Anspruch 20 wobei die erste Spiegelanordnung (217) wenigstens zwei in einer zu der Tangente orthogonalen Richtung (233) mit Abstand versetzt zueinander angeordnete Reflektoren (231, 245, 253) aufweist und wobei die zweite Spiegelanordnung (223) wenigstens einen Reflektor (241, 249) aufweist, der bezüglich der Strahlführungseinrichtung (221) in der zu der Tangente orthogonalen Richtung (233) mit Abstand versetzt angeordnet ist.

22. System nach Anspruch 21, wobei der Reflektor der ersten Spiegelanordnung (217), der im Bereich der halben optischen Weglänge des Lichtstrahls zwischen dessen Austritt aus der Strahlführungseinrichtung (221) und Eintritt in diese angeordnet ist, ein Retroreflektor (253) ist.

23. System nach Anspruch 22, wobei der Retroreflektor (253) drei paarweise orthogonal zueinander angeordnete Planspiegel umfaßt.

24. System nach einem der Ansprüche 21 bis 23, wobei die Reflektoren (231, 245, 241, 249) der ersten oder/und der zweiten Spiegelanordnung (217, 223) weingstens einen Reflektor mit zwei im wesentlichen orthogonal zueinander und mit einem Winkel von im wesentlichen 45° zu der Tangente angeordente Planspiegel (229, 231, 237, 239) aufweisen.

25. System nach einem der Ansprüche 21 bis 24 , wobei an dem Riemen (209) mindestens drei erste Spiegelanordnungen (217) mit Abstand in Umfangsrichtung des Riemens (209) voneinander angebracht sind und wobei der Abstand zwischen in Umfangsrichtung (213) jeweils benachbarten Spiegelanordnungen (217, 217) aus einem Längenbereich von 0,9 * e bis 1,2 * e, vorzugsweise 1,1 * e, ausgewählt ist, wobei e der Achsenabstand der beiden Rollen (203, 204) voneinander ist.

26. System nach Anspruch 25, wobei an dem Riemen (209) vier erste Spiegelanordnungen (217) angebracht sind und der Riemen (209) durch zwei Rollen (203, 204) gespannt ist, deren Abstand e voneinander einen Wert

e = a * D aufweist, wobei

D der Durchmessers der beiden Rollen (203, 204) ist und

a eine Zahl aus dem Bereich von 1,3 bis 1,4 ist.

27. System nach einem der Ansprüche 20 bis 26i, wobei der Riemen ein Metallband (209) umfaßt.

28. System nach einem der Ansprüche 1 bis 19, ferner umfassend eine Vorrichtung zum Bereitstellen einer änderbaren optischen Weglänge für einen Lichtstrahl, welche umfaßt:

einen ersten Spiegel (323) mit einer in wenigstens einem Umfangswinkelbereich um eine Achse (313) sich erstreckenden ersten Spiegelfläche, deren Abstand (r) von der Achse (313) in dem Umfangswinkelbereich mit zunehmendem Umfangswinkel ($\varphi$) spiralenartig zunimmt,

eine Strahlführungseinrichtung (317), welche den Lichtstrahl duch einen zentralen Bereich führt, der bezüglich der Achse (313) radial innerhalb der ersten Spiegelfläche (323) angeordnet ist,

wobei der erste Spiegel (323) und die Strahlführungseinrichtung (317) um die Achse (313) relativ zueinander drehbar sind und wobei die Strahlführungseinrichtung (317) relativ zu dem ersten Spiegel (323) derart angeordnet und orientiert ist, daß der aus der Strahlführungseinrichtung (317) austretende Lichtstrahl auf den ersten Spiegel trifft (323) und nach wenigstens einer Reflexion an dem ersten Spiegel (323) wieder in die Strahlführungseinrichtung (317) eintritt,

**dadurch gekennzeichnet, daß**

in dem zentralen Bereich ein drehfest bezüglich der Strahlführungseinrichtung (317) positionierter zweiter Spiegel (319) derart vorgesehen ist, daß der Lichtstrahl nach einer Reflexion an dem ersten Spiegel (323) auf den zweiten Spiegel (319) trifft und von diesem zurück auf den ersten Spiegel (323) reflektiert wird.

**29.** System nach Anspruch 28, wobei der zweite Spiegel (319) eine plane zweite Spiegelfläche aufweist und die erste Spiegelfläche (323) die Gestalt einer logarithmischen Spirale aufweist.

**30.** Koordinatenmeßgerät mit einer Werkstückhalterung und einem bezüglich der Werkstückhalterung räumlich verfahrbaren Tastkopf zum Antasten eines an der Werkstückhalterung anbringbaren Werkstücks, wobei das System zum Bestimmen der Position zweier Objekte relativ zueinander nach einem der vorangehenden Ansprüche vorgesehen ist, um die Position des Tastkopfes bezüglich der Werkstückhalterung zu bestimmen, und wobei die Retroreflektoren mit der Werkstückhalterung fest verbunden sind und der Emitter und der Empfänger mit dem Tastkopf fest verbunden sind oder die Retroreflektoren mit dem Tastkopf fest verbunden sind und der Emitter und der Empfänger mit der Werkstückhalterung fest verbunden sind.

**31.** Werkzeugmaschine mit einer Werkstückhalterung (3) und einem bezüglich der Werkstückhalterung (3) räumlich verfahrbaren Werkzeug (16) zum Bearbeiten eines an der Werkstückhalterung (3) anbringbaren Werkstücks (5), wobei das System zum Bestimmen der Position (x, y, z) zweier Objekte relativ zueinander nach einem der vorangehenden Ansprüche vorgesehen ist, um die Position des Werkzeuges (16) bezüglich der Werkstückhalterung (3) zu bestimmen, und wobei die Retroreflektoren (19) mit der Werkstückhalterung (3) fest verbunden sind und der Emitter (18) und der Empfänger (18) mit dem Werkzeug (16) fest verbunden sind oder die Retroreflektoren mit dem Werkzeug (16) fest verbunden sind und der Emitter (18) und der Empfänger (18) mit der Werkstückhalterung (3) fest verbunden sind.

**Claims**

**1.** A system for determining a position (x, y, z) of two objects (16, 3) relative to each other, comprising:

- a source (43) of coherent radiation,
- a beam guide for providing a measuring branch (49) for a measuring beam having an optical path length dependent on the position of said two objects (16, 3),
- a radiation intensity sensor (65) for measuring an intensity of an interfering superposition of radiation comprising at least radiation after passing through said measuring branch (49), and
- a computer (67) which responds to a measuring signal from the radiation intensity sensor (65) in order to detect optical path lengths of said measuring branch (49) and to determine from the resulting path lengths the position (x, y, z) of said two objects (16, 3) relative to each other, said measuring branch (49) comprising:
- at least one emitter (18) fixedly mountable at a first (16) of the two objects for emitting radiation supplied to said measuring branch (49) into a space between said two objects (16, 3),
- at least three retroreflectors (19) mountable at the second (3) of said two objects so that these are arranged at a fixed distance relative to each other, and
- at least one receiver (18) mountable at said first (3) of said two objects for receiving radiation reflected back from said retroreflectors (19) and for supplying the received radiation to the radiation intensity sensor (65), said emitter (18) emitting the radiation to an angular range having an aperture angle (G) which is dimensioned such that the at least three retroreflectors (19) are contained in said angular range.

**2.** The system according to claim 1, wherein said emitter and said receiver are combined to a common assembly (18).

**3.** The system according to claim 2, wherein at least three emitter-receiver assemblies (18) are provided on said first object.

**4.** The system according to claim 1, wherein said emitter and said receiver are formed as two assemblies separate from each other and mounted on said first object (3) at a fixed distance relative to each other.

**5.** The system according to claim 4, wherein at least three emitter assemblies and one receiver assembly are provided on said first object (3).

**6.** The system according to claim 4, wherein an emitter assembly and at least three receiver assemblies are provided on said first object (3).

**7.** The system according to one of claims 3, 5 and 6, wherein said computer (67) is further provided to determine an orientation ($\alpha$, $\beta$, $\gamma$) of said two objects relative to each other.

8. The system according to one of claims 3 and 5, wherein a changeover switch (55) is provided for supplying the radiation to a selectable subset of the emitters.

9. The system according to one of claims 3 and 5, wherein a radiation interrupter is assigned to each subset of the emitters, in order to selectively interrupt the radiation supplied to the respective emitter.

10. The system according to claim 6, wherein one radiation interruptor (81) is assigned to each subset of the receivers, in order to selectively interrupt the radiation supplied by the respective receiver to said radiation intensity sensor (65).

11. The system according to one of claims 1 to 10, wherein one radiation interrupter (28) is assigned to each subset of said retroreflectors (19), in order to selectively interrupt the radiation reflected back from said respective retroreflector (19).

12. The system according to one of claims 1 to 11, wherein further a beam splitter (47) is provided for splitting the radiation emitted by said source (43) in a reference beam supplied to said reference branch (51) and the measuring beam supplied to said measuring branch (49), and wherein the interfering superposition further comprises radiation after passing through said reference branch (51).

13. The system according to claim 12, wherein said reference branch (51) comprises a device for providing a variable optical path length (60) of said reference beam.

14. The system according to one of claims 1 to 11, wherein a beam splitter (47a) for splitting said measuring beam into a first partial beam and a second partial beam, a device (60a) for providing a variable optical path length for said second partial beam, and a device (71) for superimposing said first and said second partial beam are provided between said source (43a) and said emitter, in order to supply these jointly to said emitter (18a).

15. The system according to one of claims 1 to 14, wherein said first object (16) is displaceable relative to said radiation source (43) and wherein a polarisation-maintaining fiber (103) is provided, in order to supply the radiation from said source (43) to said emitter (18, 109) or/and from said receiver (18, 109) to said radiation intensity sensor (65).

16. The system according to claim 15, wherein a quarter-wave plate (113) is provided in the beam path between emitter (109) and receiver (109).

17. A system according to one of claims 1 to 16, further comprising a beam guiding arrangement, the latter comprising:

a light guiding arrangement (103) having a first end (105) at an object side and a second end (102) opposite said first end, said light guiding arrangement (103) being provided to transport light from said second end (102) to said first end (105), so that there it is emitted toward an object (19), as well as in order to receive at said first end (105) light reflected back from said object (19) and to transport it to said second end (102), and wherein said first end (105) is displaceable relative to said second end (102),
**characterized in that** at least one part of said light guiding arrangement, which is displaceable relative to said second end (102), comprises a polarisation-maintaining light conductor (103), and that further a phase plate arrangement (103) is provided which has the effect of a half-wave plate on the light between its emission at the first end and its reception at the first end.

18. The system according to claim 17, wherein a quarter-wave plate (113) is arranged in front of said first end (105).

19. The system according to claim 17 or 18, wherein light entering at said second end (102) is unpolarized light.

20. The system according to one of claims 1 to 19, further comprising a device for providing a variable optical path length for a light beam, said device comprising:

- an endless belt (209) tensioned by at least two rollers (203, 204) arranged at a distance from each other, said belt (209) extending essentially straight in a working range (215) along a common tangent of said two rollers (203, 204),
- a drive for driving said endless belt (209) in its circumferential direction (213),
- at least one first mirror arrangement (217) fixedly mounted on said endless belt (209) and running about said rollers (203, 204) with said belt (209),

- a beam guiding device (221) which directs the light beam substantially parallel with a direction of extension of said endless belt (209) in the working range (215) and towards said first mirror arrangement (217) when it is arranged in the working range (215),

wherein said first mirror arrangement (217) reflects back the light beam directed to said beam guiding device (221), in a way that it reenters therein,

**characterized in that**

a second mirror arrangement (223) is provided which is fixedly arranged relative to said beam guiding device (221) and the first and said second mirror arrangement (217, 223) are arranged such that the light beam is reflected back and forth between the first and the second mirror arrangement (217, 223) at least once between its exit from the beam guiding device (221) and the entry therein.

21. The system according to claim 20, wherein said first mirror arrangement (217) has at least two reflectors (231, 245, 253) offset and at a distance from each other in a direction (233) orthogonal to the tangent, and

wherein said second mirror arrangement (223) comprises at least one reflector (241, 249) offset at a distance in a direction (233) orthogonal to the tangent.

22. The system according to claim 21, wherein the reflector of said first mirror arrangment (217) is a retroreflector (253) arranged in the area of half the optical path length of the light beam between its exit from the beam guiding device (221) and its entry therein.

23. The system according to claim 22, wherein said retroreflector (253) comprises three plane mirrors arranged in pairs, each pair of said three mirrors being arranged orthogonal to each other.

24. The system according to one of claims 21 to 23, wherein said reflectors (231, 245, 241, 249) of said first or/and said second mirror arrangement (217, 223) comprise at least one reflector having two plane mirrors (229, 231, 237, 239) which are in substantially orthogonal relationship with each other and at an angle of substantially 45° relative to the tangent.

25. The system according to one of claims 21 to 24, wherein on said belt (209) at least three first mirror arrangements (217) are disposed at a distance from each other in circumferential direction of said belt (209), and wherein the distance between mirror arrangements (217', 217") each adjacent in circumferential direction (213) is selected from a length range of 0.9·e to 1.2·e, preferably 1.1·e, e being the axial distance of said two rollers (203, 204) from each other.

26. The system according to claim 25, wherein four first mirror arrangements (217) are disposed on said belt (209) and said belt (209 is tensioned by two rollers (203, 204), whose distance e from each other has a value

$$e = a \cdot D,$$

D being the diameter of the two rollers (203, 204) and a being a number within the range of 1.3 to 1.4.

27. The system according to one of claims 20 to 26, wherein said belt comprises a metal band (209).

28. A system according to one of claims 1 to 19, further comprising a device for providing a variable optical path length for a light beam, said device comprising:

a first mirror (323) having a first mirror surface extending in at least one circumferential angle area about an axis (313), the distance (r) of said first mirror surface from said axis (313) in the circumferential angle area increasing in spiral manner with an increasing circumferential angle ($\varphi$) ,

a beam guiding device (317) which guides the light beam through a central area which is arranged radially within said first mirror surface (323) with respect to said axis (313),

wherein said first mirror (323) and said beam guiding device (317) are rotatable relative to each other about said axis (313) and wherein the beam guiding device (317) is arranged and oriented relative to said first mirror (323), such that said light beam emitting from said beam guiding device (317) impinges on said first mirror (323) and after at least one reflection at said first mirror (323) reenters said beam guiding device (317),

**characterized in that**

in the central area a second mirror (319) which is positioned rotationally fixed with respect to said beam guiding device (317) such that said light beam impinges on said second mirror (319) after reflection at said first mirror (323) and is reflected back from said second mirror (319) to said first mirror (323).

29. A system according to claim 28, wherein said second mirror (319) comprises a plane second mirror surface and said first mirror surface (323) has the shape of a logarithmic spiral.

30. A coordinate measuring device having a workpiece mounting and a scanning head spatially displaceable with respect to said workpiece mounting, said scanning head being provided for scanning a workpiece mountable at said workpiece mounting, wherein the system for determining the position of two objects relative to each other according to one of the preceding claims is provided in order to determine the position of said scanning head with respect to said workpiece mounting, and wherein said retroreflectors are fixedly connected with said workpiece mounting, and said emitter and said receiver are fixedly connected with said scanning head or said retroreflectors are fixedly connected with said scanning head and said emitter and said receiver are fixedly connected with said workpiece mounting.

31. A machine tool having a workpiece mounting (3) and a tool (16) spatially displaceable with respect to said workpiece mounting (3) for processing a workpiece (5) to be mounted at said workpiece mount (3), wherein the system for determining the position (x, y, z) of two objects relative to each other is provided according to one of the preceding claims, in order to determine the position of said tool (16) with respect to said work piece mount (3), and wherein said retroreflectors (19) are fixedly connected with said workpiece mount (3) and said emitter (18) and said receiver (18) are fixedly connected with said tool (16) or said retroreflectors are fixedly connected with said tool (16) and said emitter (18) and said receiver (18) is fixedly connected with said workpiece mounting (3).

## Revendications

1. Système pour déterminer une position (x, y, z) de deux objets (16, 3) l'un par rapport à l'autre, comprenant :

   - une source (43) de rayonnement cohérent,
   - un guidage de faisceau pour fournir une branche de mesure (49) pour un faisceau de mesure, qui comprend un trajet optique dépendant de la position des deux objets (16, 3),
   - un intensimètre de rayonnement (65) pour mesurer une intensité d'une superposition interférente du rayonnement, qui comporte au moins un rayonnement après la traversée de la branche de mesure (49), et
   - un calculateur (67) qui répond à un signal de mesure de l'intensimètre de rayonnement (65) pour déterminer des trajets optiques de la branche de mesure (49) et, à partir de ces derniers, la position (x, y, z) des deux objets (16, 3) l'un par rapport à l'autre,
   la branche de mesure (49) comportant :
   - au moins un émetteur (18) pouvant être installé fixement sur un premier (16) des deux objets pour émettre le rayonnement amené à la branche de mesure (49) dans un espace entre les deux objets (16, 3),
   - au moins trois rétro-réflecteurs (19) pouvant être montés sur le deuxième (3) des deux objets de manière telle qu'ils soient disposés à des distances fixes les uns par rapport aux autres, et
   - au moins un récepteur (18) pouvant être monté sur le premier (3) des deux objets, pour recevoir un rayonnement renvoyé par les rétro-réflecteurs (19) et à amener le rayonnement reçu à l'intensimètre de rayonnement (65), l'émetteur (18) émettant le rayonnement dans une plage d'angle solide qui comporte un angle d'ouverture (G) qui est choisi suffisamment grand pour que les trois rétro-réflecteurs ou plus (19) soient contenus dans la plage d'angle solide.

2. Système selon la revendication 1, dans lequel l'émetteur et le récepteur sont réunis dans un sous-ensemble commun (18).

3. Système selon la revendication 2, dans lequel au moins trois sous-ensembles émetteurs-récepteurs (18) sont prévus sur le premier objet.

4. Système selon la revendication 1, dans lequel l'émetteur et le récepteur sont formés dans des sous-ensembles séparés l'un de l'autre et montés sur le premier objet (3) à une distance fixe l'un par rapport à l'autre.

5. Système selon la revendication 4, selon lequel au moins trois sous-ensembles émetteurs et un sous-ensemble récepteur sont prévus sur le premier objet (3).

**6.** Système selon la revendication 4, dans lequel un sous-ensemble émetteur et au moins trois sous-ensembles récepteurs sont prévus sur le premier objet (3).

**7.** Système selon l'une des revendications 3, 5 et 6, dans lequel le calculateur (67) est prévu en plus pour déterminer une orientation ($\alpha$, $\beta$, $\gamma$) des deux objets l'un par rapport à l'autre.

**8.** Système selon l'une des revendications 3 et 5, dans lequel il est prévu un commutateur (55) pour diriger le rayonnement d'un nombre partiel sélectionnable des émetteurs.

**9.** Système selon l'une des revendications 3 et 5, dans lequel un rupteur de rayonnement est affecté respectivement au nombre partiel des émetteurs afin d'interrompre au choix le rayonnement amené à l'émetteur correspondant.

**10.** Système selon la revendication 6, dans lequel un rupteur de rayonnement (81) est affecté respectivement à un nombre partiel des récepteurs afin d'interrompre au choix le rayonnement amené à l'intensimètre de rayonnement (65) par le récepteur correspondant.

**11.** Système selon l'une des revendications 1 à 10, dans lequel un rupteur de rayonnement (28) est affecté respectivement à un nombre partiel des rétro-réflecteurs (19) afin d'interrompre au choix le rayonnement renvoyé par le rétro-réflecteur (19) correspondant.

**12.** Système selon l'une des revendications 1 à 11, dans lequel il est prévu en outre un répartiteur de faisceau (47) pour diviser le rayonnement émis par la source (43) en un faisceau de référence amené à la branche de référence (51) et en un faisceau de mesure amené à la branche de mesure (49) et dans lequel la superposition interférente comporte en outre un rayonnement après la traversée de la branche de référence (51).

**13.** Système selon la revendication 12, dans lequel la branche de référence (51) comporte un dispositif pour fournir un trajet optique modifiable (60) du faisceau de référence.

**14.** Système selon l'une des revendications 1 à 11, dans lequel il est prévu, entre la source (43a) et l'émetteur, un répartiteur de faisceau (47a) pour diviser le faisceau de mesure en un premier faisceau partiel et en un deuxième faisceau partiel, un dispositif (60a) pour fournir un trajet optique modifiable pour le deuxième faisceau partiel et un dispositif (71) pour superposer les premier et deuxième faisceaux partiels afin d'amener ces derniers en commun à l'émetteur (18a).

**15.** Système selon l'une des revendications 1 à 14, dans lequel le premier objet (16) est mobile par rapport à la source de rayonnement (43) et dans lequel il est prévu une fibre optique conservant la polarisation (103) afin d'amener le rayonnement de la source (43) à l'émetteur (18, 109) ou/et du récepteur (18, 109) à l'intensimètre de rayonnement (65).

**16.** Système selon la revendication 15, dans lequel une plaque quart d'onde (113) est prévue dans l'entrée du faisceau entre l'émetteur (109) et le récepteur (109).

**17.** Système selon l'une des revendications 1 à 16, comportant en outre un dispositif de guidage de faisceau qui comprend un dispositif conducteur optique (103) ayant une première extrémité du côté de l'objet (105) et une deuxième extrémité (102) disposée en regard de la première extrémité, dans lequel le dispositif conducteur optique (103) est prévu pour transporter la lumière de la deuxième extrémité (102) à la première extrémité (105) de sorte que, de là, elle soit émise vers un objet (19), ainsi que pour recevoir à la première extrémité (105) la lumière renvoyée par l'objet (19) et pour la transporter à la deuxième extrémité (102), et dans lequel la première extrémité (105) est mobile par rapport à la deuxième extrémité (102), **caractérisé en ce qu'**au moins une partie du dispositif conducteur optique mobile par rapport à la deuxième extrémité (102) comporte un conducteur optique conservant la polarisation (103) et **en ce qu'**il est prévu en outre un dispositif de plaque de phase (103) qui présente l'effet d'une plaque demi-onde sur la lumière entre son émission à la première extrémité et sa réception à la deuxième extrémité.

**18.** Système selon la revendication 17, dans lequel une plaque quart d'onde (113) est disposée devant la première extrémité (105).

**19.** Système selon la revendication 17 ou 18, dans lequel la lumière incidente sur la deuxième extrémité (102) est une lumière non polarisée.

**20.** Système selon l'une des revendications 1 à 19, comprenant en outre un dispositif pour fournir un trajet optique modifiable pour un faisceau lumineux, lequel dispositif comporte :

- une courroie sans fin (209) tendue par au moins deux rouleaux (203, 204) disposés à une certaine distance l'un de l'autre, la courroie (209) s'étendant sensiblement en ligne droite dans une zone de travail (215) le long d'une tangente commune des deux rouleaux (203, 204),
- un entraînement pour entraîner la courroie sans fin (209) dans sa direction tangentielle (213),
- au moins un premier dispositif de miroir (217) installé fixement sur la courroie sans fin (209) et passant avec celle-ci autour des rouleaux (203, 204),
- un dispositif de guidage de faisceau (221), qui dirige le faisceau lumineux sensiblement parallèle à une direction d'extension de la courroie sans fin (209) dans la zone de travail (215) et vers le premier dispositif de miroir (217) lorsque celui-ci est situé dans la zone de travail (215), le premier dispositif de miroir (217) réfléchissant le faisceau lumineux, dirigé sur lui, sur le dispositif de guidage de faisceau (221) de sorte que le faisceau soit de nouveau incident sur ledit dispositif de guidage,

**caractérisé en ce que**
il est prévu un deuxième dispositif de miroir (223) installé fixement sur le dispositif de guidage de faisceau (221) et les premier et deuxième dispositifs de miroir (217, 223) sont conçus de manière telle que le faisceau lumineux entre sa sortie du dispositif de guidage de faisceau (221) et son entrée dans ce dernier soit au moins réfléchi une fois d'avant en arrière entre les premier et deuxième dispositifs de miroir (217, 223).

**21.** Système selon la revendication 20, dans lequel le premier dispositif de miroir (217) comprend au moins deux réflecteurs (231, 245, 253) disposés décalés d'une certaine distance l'un par rapport à l'autre dans une direction (233) orthogonale à la tangente et

dans lequel le deuxième dispositif de miroir (223) comprend au moins un réflecteur (241, 249) qui est disposé décalé d'une certaine distance par rapport au dispositif de guidage de faisceau (221) dans la direction (233) orthogonale à la tangente.

**22.** Système selon la revendication 21, dans lequel le réflecteur du premier dispositif de miroir (217), qui est disposé dans la zone du demi-trajet optique du faisceau lumineux entre sa sortie du dispositif de guidage de faisceau (221) et son entrée dans celui-ci, est un rétro-réflecteur (253).

**23.** Système selon la revendication 22, dans lequel le rétro-réflecteur (253) comporte trois miroirs plans disposés par paire orthogonalement les uns aux autres.

**24.** Système selon l'une des revendications 21 à 23, dans lequel les réflecteurs (231, 245, 241, 249) du premier et/ou du deuxième dispositif de miroir (217, 223) comprennent au moins un réflecteur doté de deux miroirs plans (229, 231, 237, 239) qui sont disposés sensiblement orthogonaux l'un par rapport à l'autre et présentent un angle sensiblement de 45° par rapport à la tangente.

**25.** Système selon l'une des revendications 21 à 24, dans lequel au moins trois premiers dispositifs de miroir (217) sont disposés sur la courroie (209) à une certaine distance les uns des autres dans une direction circonférentielle de la courroie (209) et dans lequel la distance entre des dispositifs de miroir (217, 217) respectivement voisins dans la direction circonférentielle (213) est choisie dans une plage de longueurs de 0,9 * e à 1,2 * e, de préférence 1,1 * e, e étant la distance axiale entre les deux rouleaux (203, 204).

**26.** Système selon la revendication 25, dans lequel quatre premiers dispositifs de miroir (217) sont disposés sur la courroie (209) et la courroie (209) est tendue par deux rouleaux (203, 204) dont la distance e entre eux a une valeur

$$e = a * D,$$

D étant le diamètre des deux rouleaux (203, 204) et a un nombre dans la plage de 1,3 à 1,4.

**27.** Système selon l'une des revendications 20 à 26, dans lequel la courroie comporte une bande métallique (209).

**28.** Système selon l'une des revendications 1 à 19, comportant en outre un dispositif pour fournir un trajet optique modifiable pour un faisceau lumineux, ledit dispositif comporte :

un premier miroir (323) doté d'une première surface de miroir qui s'étend dans au moins une plage d'angle solide autour d'un axe (313) et dont la distance (r) de l'axe (313) dans la plage d'angle solide présente une augmentation en forme de spirale au fur et à mesure que l'angle solide ($\varphi$) augmente,
un dispositif de guidage de faisceau (317) qui guide le faisceau lumineux à travers une zone centrale qui est disposée de manière radiale par rapport à l'axe (313) à l'intérieur de la première surface de miroir (323),
le premier miroir (323) et le dispositif de guidage de faisceau (317) pouvant pivoter l'un par rapport à l'autre autour de l'axe (313) et le dispositif de guidage de faisceau (317) étant disposé et orienté par rapport au premier miroir (323) de manière telle que le faisceau lumineux sortant du dispositif de guidage de faisceau (317) soit incident sur le premier miroir (323) et que, après au moins une réflexion sur le premier miroir (323), il pénètre de nouveau dans le dispositif de guidage de faisceau (317),
**caractérisé en ce que**
il est prévu dans la zone centrale un deuxième miroir (319) positionné fixe en rotation par rapport au dispositif de guidage de faisceau (317) de manière telle que, après une réflexion sur le premier miroir (323), le faisceau lumineux soit incident sur le deuxième miroir (319) et soit réfléchi par ce dernier sur le premier miroir (323).

29. Système selon la revendication 28, dans lequel le deuxième miroir (319) comporte une deuxième surface de miroir et la première surface de miroir (323) présente la forme d'une spirale logarithmique.

30. Appareil de mesure de coordonnées équipé d'un support de pièce à usiner et d'un palpeur qui est déplaçable dans l'espace par rapport au support de pièce à usiner et qui sert à palper une pièce à usiner montée sur le support de pièce à usiner, dans lequel il est prévu le système pour déterminer la position de deux objets l'un par rapport à l'autre selon l'une quelconque des revendications précédentes afin de déterminer la position du palpeur par rapport au support de pièce à usiner, et dans lequel soit les rétro-réflecteurs sont reliés de manière fixe au support de pièce à usiner tandis que l'émetteur et le récepteur sont reliés de manière fixe au palpeur, soit les rétro-réflecteurs sont reliés de manière fixe au palpeur tandis que l'émetteur et le récepteur sont reliés de manière fixe au support de pièce à usiner.

31. Machine-outil équipée d'un support de pièce à usiner (3) et d'un outil (16) qui est déplaçable dans l'espace par rapport au support de pièce à usiner (3) et qui sert à usiner une pièce à usiner (5) montée sur le support de pièce à usiner (3), dans laquelle il est prévu le système pour déterminer la position (x, y, z) de deux objets l'un par rapport à l'autre selon l'une quelconque des revendications précédentes afin de déterminer la position de l'outil (16) par rapport au support de pièce à usiner (3), et dans lequel soit les rétro-réflecteurs (19) sont reliés de manière fixe au support de pièce à usiner (3) tandis que l'émetteur (18) et le récepteur (18) sont reliés de manière fixe à l'outil (16), soit les rétro-réflecteurs sont reliés de manière fixe à l'outil (16) tandis que l'émetteur (18) et le récepteur (18) sont reliés de manière fixe au support de pièce à usiner (3).

Fig. 1

EP 1 251 328 B1

Fig. 2

Fig. 3

EP 1 251 328 B1

Fig. 4

Fig. 5

Fig. 6

EP 1 251 328 B1

33

Fig. 7

EP 1 251 328 B1

Fig. 8

EP 1 251 328 B1

Fig. 9

Fig. 10

Fig. 11

EP 1 251 328 B1

Fig. 12

Fig. 13

EP 1 251 328 B1

Fig. 14

Fig. 15

EP 1 251 328 B1

$$\text{geg.: } \vec{F}_{1\dots3}, \vec{R}_{1\dots3}$$
$$\text{es gilt: } F_{jz} = R_{iz} = 0 \; \forall\, i,j \qquad \sim 35$$

$$\text{Berechnung: } A^* = A^T \left( A A^T \right)^{-1} \qquad \sim 36$$

$$\text{Messung: } d_{1\dots9} \qquad \sim 37$$

$$\text{Aufbau } \vec{L} \; ; \; \text{Berechnung: } \vec{q} = A^* \, \vec{L} \qquad \sim 38$$

Best. der restlichen Elemente
der Rotationsmatrix ROT $\qquad \sim 39$

Bestimmung Translation + Rotation;
d.h. Position und Lage bestimmt $\qquad \sim 40$

nächste Messung

## Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8807656 A

- US 5808740 A